# EUROPÄISCHE PATENTSCHRIFT

(11) **EP 3 351 056 B1**
(45) Veröffentlichungstag und Bekanntmachung des Hinweises auf die Patenterteilung: **14.08.2019**
(21) Anmeldenummer: 16767231.0
(22) Anmeldetag: 15.09.2016
(51) Int. Cl.: G06F 1/26, H04L 12/413, H04L 12/46, H05B 37/02, H04L 12/10

(54) **VERSORGUNGSEINHEIT FÜR EINEN BUS**
SUPPLY UNIT FOR A BUS
UNITÉ D'ALIMENTATION D'UN BUS

(30) Priorität: 17.09.2015 DE 102015217835; 29.01.2016 DE 102016201390
(43) Veröffentlichungstag der Anmeldung: 25.07.2018
(73) Patentinhaber: Tridonic GmbH & Co. KG, 6851 Dornbirn (AT)
(72) Erfinder: PEREIRA, Eduardo, 8854 Siebnen (CH); KELLER, Ueli, 8738 Uetliburg (CH); ZINGG, Urs, 8718 Schänis (CH)
(74) Vertreter: Rupp, Christian
(86) Internationale Anmeldenummer: PCT/EP2016/071832
(87) Internationale Veröffentlichungsnummer: WO 2017/046248

(56) Entgegenhaltungen:
- EP-A2- 0 749 070
- US-A1- 2014 095 749

## Beschreibung

Die Erfindung betrifft ein Verfahren zum Betreiben eines Spannungsversorgungssystems, bevorzugt in einem Beleuchtungssystems, ein Spannungsversorgungssystem für einen im Ruhezustand Spannung führenden Bus mit zumindest zwei parallel geschalteten Versorgungseinheiten sowie eine Versorgungseinheit für einen im Ruhezustand Spannung führenden Bus, wobei die Versorgungseinheit dazu ausgelegt ist, Busteilnehmer mittels des Busses mit einer DC-Spannung zu versorgen.

Das Beleuchtungssystem weist dabei bevorzugt den Bus auf, der dazu ausgelegt ist, im Ruhezustand Spannung zu führen und daher als Spannungsversorgung für Aktoren und Sensoren in dem Beleuchtungssystem zu dienen. Ein Beispiel für einen derartigen Bus ist das Digital Addressable Lighting Interface, kurz: DALI, das im IEC 62386 normiert ist.

DALI ist in der Gebäudeautomatisierung ein Protokoll zur Steuerung von lichttechnischen Betriebsgeräten, wie beispielsweise Schaltnetzteilen, elektronischen Vorschaltgeräten oder elektrischen Leistungsdimmern, um Leuchtmittel zu steuern, deren Betriebszustand zu überwachen und/oder mit Strom zu versorgen.

Jedes Betriebsgerät, das über eine DALI-Schnittstelle verfügt, kann über entsprechende DALI-Adressen einzeln angesteuert werden und kann die Intensität eines Leuchtmittels oder einer Sensorik im Beleuchtungssystem verändern. Überdies sind Aktoren vorgesehen. Ein bidirektionaler Datenaustausch zwischen einem DALI-Steuergerät und einem DALI-Gerät ermittelt beispielsweise den Status eines einzelnen Leuchtmittels oder einer Gruppe von Leuchtmitteln oder dem Betriebsgerät selbst und kann darüber hinaus dieses steuern. DALI verwendet ein serielles asynchrones Datenprotokoll mit einer Übertragungsrate von 1200 Bit/s bei einem Spannungsniveau von 16 V mittels Zweidrahtkommunikation.

Die Energieversorgung des Beleuchtungssystems erfolgt über einen gesonderten Bus. Dabei sind zwei Kommunikationsleitungen DA+ und DA- bevorzugt galvanisch von dieser Netzversorgung getrennt und polaritätsfrei. Diese zwei Kommunikationsleitungen DA+ und DA- dienen gleichzeitig als Spannungsversorgungsleitungen. Diese Leitungen können in beliebiger Topologie, also Stern-, Linien- oder Baumstruktur verlegt werden. Abschlusswiderstände am Ende der Stromversorgungsleitungen sind nicht notwendig. Die zwei Kommunikationsleitungen, die auch als Versorgungsleitungen dienen werden nachfolgend als Spannung führender Bus bezeichnet.

Aus dem DALI-Standard IEC 62386 ist abzuleiten, dass maximal 64 Aktoren pro Bus angesteuert werden können. Die maximale Stromentnahme des Busses ist dabei auf einen vorgegeben Wert beschränkt und beträgt bevorzugt 250 Milliampere, was nachfolgend als maximale Stromentnahme bezeichnet ist.

Um sicherzustellen, dass die maximale Stromentnahme von 250 Milliampere aus dem Bus nicht überschritten wird, ist eine spezielle DALI-Versorgungseinheit vorgesehen. Diese DALI-Versorgungseinheit erzeugt einen konstanten Ausgangsstrom von nominal 200 Milliampere bis 250 Milliampere bei einer Spannungsversorgung von 16 Volt im Ruhemodus des Beleuchtungssystems.

Für eine aktuelle Stromentnahme oberhalb des vorgegebenen Werts für eine maximale Stromentnahme sind die an den Bus angeschlossenen Busteilnehmer nicht ausgelegt, sodass die Busteilnehmer vor einer Stromentnahme oberhalb der maximalen Stromentnahme zu schützen sind. Insbesondere eine Parallelschaltung mehrere DALI-Versorgungseinheiten ist daher nicht möglich, da bei Parallelschaltung ein Ausgangsstrom auf dem Bus erzeugt würde, der oberhalb der maximalen Stromentnahme liegt.

Darüber hinaus ist gemäß DALI-Standard IEC 62389 vorgesehen, dass eine Kommunikation zwischen einzelnen Elementen des Beleuchtungssystems, nachfolgend auch als Busteilnehmer bezeichnet, über den Bus unmöglich ist, bevor nicht eine Startprozedurwartezeit abgelaufen ist. Erst nach dem Ablauf dieser Startprozedurwartezeit gilt der DALI-Bus als stabil und lässt eine Kommunikation zwischen den Busteilnehmern zu. Die Startprozedurwartezeit beträgt bevorzugt 600 Millisekunden.

Würden also mehrere DALI-Versorgungseinheiten parallel betrieben werden, könnte innerhalb dieser Startprozedurwartezeit ein durch den Bus fließender Strom die maximale Stromentnahme überschreiten, wodurch die Busteilnehmer möglicherweise überlastet würden und somit beschädigt oder zerstört würden.

Darüber hinaus ist es im DALI-Beleuchtungssystem-Bus nicht möglich, ein DALI-Beleuchtungselement, beispielsweise ein Leuchtmittel oder Leistungsdimmer oder elektronisches Vorschaltgerät unabhängig von einer DALI-Versorgungseinheit zu betreiben.

Mitunter besteht bei der Planung von Beleuchtungssystem in Gebäuden oder Gebäudeteilen der Wunsch, ein möglichst flexibles Beleuchtungssystem bereitzustellen. So ist es wünschenswert, eine Vielzahl kleinerer Beleuchtungssysteme zu installieren, beispielsweise mit einer geringen Anzahl von Leuchtmitteln, Aktoren und Sensoren. Bei einer derart geringen Anzahl von Elementen wird die maximale Stromentnahme von 250 Milliampere niemals erreicht.

Alternativ oder zusätzlich ist es wünschenswert, den Bus flexibel zu clustern, also die Busteilnehmer im Bus möglichst flexibel zu einem ersten oder einem zweiten Beleuchtungssubsystem zuzuschalten oder ein bestehendes Beleuchtungssystem flexibel zu erweitern. Da ein Parallelschalten von mehreren DALI-Versorgungseinheiten gemäß dem DALI-Standard nicht vorgesehen ist, muss für jedes denkbare Cluster eine eigene DALI-Versorgungseinheit vorgesehen werden.

In all diesen Ausgestaltungsvarianten sind die vergleichsweise kostenintensiven DALI-Versorgungseinheiten zu verwenden. Bei Verwendung derartiger DALI-Versorgungseinheiten wäre die Versorgung des Busses des Beleuchtungssystems in nachteiliger Weise einerseits überdimensioniert und andererseits nur teuer herstellbar.

Die Druckschrift EP0749070 A2 offenbart ein System, bestehend aus einem Bus und daran angeschlossenen Busteilnehmern, die zum dezentralen Speisen des Busses je eine ein- und abschaltbare Bus-Speisung aufweisen. Die Busteilnehmer entscheiden selbstständig, ob in Abhängigkeit einer auf dem Bus vorhandenen Stromsituation ihre Bus-Speisung den Bus speist, oder nicht speist. Dazu enthalten die Busteilnehmer jeweils eine Strom-Messeinrichtung zum Messen eines über den Bus fließenden Bus-Stromes. Abhängig von der ermittelten Größe des Bus-Stromes entscheidet ein Bus Teilnehmer, ob er den Bus speist, oder nicht. Hinsichtlich der mittels der Strom-Messeinrichtung gemessenen Ströme nimmt die D2 keine Unterscheidung vor. Es wird immer der über den Bus fließenden Bus-Strom, unabhängig von weiteren Zuständen, gemessen.

Es ist somit Aufgabe der hier vorliegenden Erfindung, ein Spannungsversorgungssystem sowie eine Versorgungseinheit bereitzustellen, welches speziell für kleinere Beleuchtungsanwendungen, beispielsweise zum Betreiben einer einstelligen Anzahl von Aktoren und Sensoren, verwendbar ist und die oben genannten Nachteile beseitigt. Insbesondere soll ein Beleuchtungssystem hochflexibel mit Energie versorgt werden, wobei die dazu verwendete Versorgungseinheit nicht überdimensioniert sein soll und trotzdem der DALI-Standard eingehalten wird.

Die Aufgabe wird mit den in den nebengeordneten Patentansprüchen beschriebenen Maßnahmen gelöst. Vorteilhafte Ausgestaltungen sind in den jeweils abhängigen Ansprüchen beschrieben.

In einem ersten Aspekt der Erfindung wird eine Versorgungseinheit für einen im Ruhezustand Spannung führenden Bus vorgeschlagen. Die Busteilnehmer werden mittels des Busses mit einer DC-Spannung versorgt, wobei eine maximale Stromentnahme aus dem Bus durch Busteilnehmer auf einen vorgegebenen Wert beschränkt ist. Die Versorgungseinheit weist dazu eine Schaltung, die eingerichtet ist, die aktuelle Stromentnahme aus dem Bus durch ein Kurzschließen des Busses zu erfassen.

Durch diese Schaltung wird somit die aktuell erfasste Stromentnahme des Busses erfasst, sodass ein Überschreiten des vorgegeben Werts für die maximale Stromentnahme detektierbar ist. Es können somit Maßnahmen eingeleitet werden, um die Stromentnahme zu begrenzen oder um Festzustellen, ob die Versorgungseinheit einen zusätzlichen Strom auf den Bus einspeisen kann, ohne den Wert zu überschreiten.

Mit Ruhezustand ist ein Buszustand gemeint, indem nur eine Spannung bzw. ein Strom auf dem Bus geführt wird und insbesondere keine Datenkommunikation erfolgt.

Ein vorgegebener Wert ist beispielsweise der maximal zulässige Strom gemäß DALI-Standard. Dieser Wert ist beispielsweise in einer Speichereinheit der Versorgungseinheit abgelegt und kann auch für ein jeweilig geändertes Beleuchtungssystem angepasst werden.

Bevorzugt weist die Schaltung der Versorgungseinheit einen Kurzschlussschalter auf, der zum Kurzschließen des Busses geeignet ist. Überdies ist eine Steuereinheit in der Schaltung der Versorgungseinheit vorgesehen, wobei die Steuereinheit eingerichtet ist, den Kurzschlussschalter in einen ersten Schaltzustand zu schalten, in welchem der Bus kurzgeschlossen ist und den Kurzschlussschalter in einen zweiten Schaltzustand zu schalten, in welchem der Kurzschluss des Busses aufgehoben wird. Die Steuereinheit ist weiter dazu eingerichtet, im ersten Schaltzustand des Kurzschlussschalters die aktuelle Stromentnahme aus dem Bus zu erfassen.

Bevorzugt ist der Bus ein DALI-standardisierter Bus eines Beleuchtungssystems. Mindestens ein Busteilnehmer ist dabei ein Element im Beleuchtungssystem. Das Beleuchtungssystem ist bevorzugt gemäß dem DALI-Standard IEC 62389 zu betreiben.

Als Element im Beleuchtungssystem ist beispielsweise ein Leuchtmittel, eine Betriebsgerät für ein Leuchtmittel, ein Leistungsdimmer, ein Aktor und/oder ein Sensor für ein Beleuchtungssystem zu verstehen.

Der Bus umfasst somit zwei Versorgungsleitungen DA+ und DA-, die alle angeschlossenen Busteilnehmer mit der Versorgungseinheit parallel verbindet. Diese Versorgungsleitungen werden in unterschiedlicher Topologie mit jedem Element des Beleuchtungssystems parallel verbunden.

Erfindungsgemäß ist nun vorgesehen, dass ein Kurzschlussschalter in der Schaltung der Versorgungseinheit vorgesehen ist, um die Versorgungsleitungen des Busses zu verbinden oder eine bestehende Verbindung zu öffnen. In der Verbindung zwischen den Versorgungsleitungen befindet sich beispielsweise ein Messelement, bevorzugt ein Strom-Messwiderstand. Die Steuereinheit der Schaltung ist dazu eingerichtet, einen Strom mittels des Messelements zu erfassen, beispielsweise durch Erfassen eines Spannungsabfalls über dem Strom-Messwiderstand, der in der Steuereinheit zu einer erfassten aktuellen Stromentnahme umgerechnet wird.

Somit kann die Versorgungseinheit des Busses erkennen, ob eine Stromentnahme aus dem Bus einer maximalen Stromentnahme entspricht oder diese sogar bereits überschreitet. Die Versorgungseinheit wird keine zusätzliche Energie für den Bus bereitstellen, wenn die maximale Stromentnahme erreicht ist oder bereits überschritten wurde.

Auf diese Weise wird ein modulares Versorgungssystem für den Bus erhalten. Die Versorgungseinheit weist bevorzugt einen maximalen Ausgangsstrom auf, der einem Bruchteil der maximalen Stromentnahme des Busses entspricht. Beispielsweise ist der Ausgangsstrom der Versorgungseinheit ein Zehntel oder ein Fünfzehntel des der maximalen Stromentnahme. Auf diese Weise sind kostengünstigere Versorgungseinheiten verwendbar.

Somit können mehrere Versorgungseinheiten in einem Spannungsversorgungsystem parallel geschaltet werden und es ist dabei stets sichergestellt, dass die maximale Stromentnahme nicht überschritten wird. Eine Parallelschaltung bietet somit die Möglichkeit, dass eine Energieversorgung des Busses beliebig erweitert/vergrößert werden kann und weitere Elemente im Beleuchtungssystem durch Hinzuschalten weiterer Versorgungseinheiten im Spannungsversorgungssystem versorgt werden können. Eine flexible Clusterung des Beleuchtungssystems in einem Gebäude oder einem Gebäudeteil ist somit erreicht.

In einer bevorzugten Ausgestaltung ist die Versorgungseinheit in einem Master-Modus betreibbar, in welchem die Versorgungseinheit die Hauptversorgung des Busses ist. Zusätzlich ist die Versorgungseinheit in einem Slave-Modus betreibbar, in welchem die Versorgungseinheit eine Hilfsversorgung des Busses bei Bedarf ist, wobei in Abhängigkeit der erfassten aktuellen Stromentnahme aus dem Bus die Versorgungseinheit im Master-Modus oder im Slave-Modus betreibbar ist.

Befinden sich mehrere Versorgungseinheiten in einem Spannungsversorgungssystem, so kann damit eine Hauptversorgung durch eine erste Versorgungseinheit gewährleistet werden, wobei bei Bedarf zumindest eine weitere Versorgungseinheit hinzugeschaltet werden kann, solange die maximale Stromentnahme aus dem Bus nicht überschritten ist. Die Hauptversorgung wird dabei von der Versorgungseinheit im Master-Modus bereitgestellt. Pro Beleuchtungssystem ist lediglich eine Versorgungseinheit im Master-Modus zu betreiben.

In einer bevorzugten Ausgestaltung wird die DC-Spannung oder der Ausgangsstrom dem Bus bereitgestellt, wenn der Kurzschlussschalter in den zweiten Schaltzustand geschaltet ist. Es wird somit sichergestellt, dass zunächst die Versorgungseinheit nicht den Bus versorgt, solange die aktuelle Stromentnahme aus dem Bus nicht erfasst wurde. Erst wenn sichergestellt ist, dass die Versorgung eine maximale Stromentnahme nicht überschreitet, so wird die Versorgungseinheit einen zusätzlichen Ausgangsstrom an den Bus bereitstellen. Somit erfolgt das Schalten des Kurzschlussschalters unabhängig vom Bereitstellen der Energieversorgung.

In einer bevorzugten Ausgestaltung ist die Versorgungseinheit mit einer Versorgungswechselspannung betreibbar. Somit umfasst die Versorgungseinheit eine Spannungsreduzierung und ggf. eine Gleichrichtung. Als Versorgungswechselspannung ist beispielsweise eine Netzspannung in Höhe von 230 Volt bei 50 Hertz zu verstehen. Andere nominale Netzversorgungswerte sind vom Erfindungsgedanken nicht ausgeschlossen.

In einer bevorzugten Ausgestaltung ist die Steuereinheit eingerichtet, nach dem Erfassen der aktuellen Stromentnahme, einen aktuellen Spannungswert auf dem Bus zu erfassen. Mittels der Spannungswerterfassung wird festgestellt, ob weitere Versorgungseinheiten an den Bus angeschlossen sind.

In einer bevorzugten Ausgestaltung ist die Steuereinheit dazu eingerichtet, die aktuelle Stromentnahme mit dem vorgegebenen Wert für eine maximale Stromentnahme zu vergleichen, wobei bei Überschreiten des vorgegebenen Wertes die Versorgungseinheit im Master-Modus betrieben wird.

Die Steuereinheit ist bevorzugt dazu eingerichtet, die aktuelle Stromentnahme erst nach Ablauf einer individuellen Zufallswartezeit zu erfassen. Dies führt dazu, dass die Erfassung zu unterschiedlichen Zeiten auf dem Bus erfolgt.

In einem weiteren Aspekt der Erfindung ist ein Spannungsversorgungssystem, bevorzugt für ein Beleuchtungssystem, für einen im Ruhezustand Spannung führenden Bus vorgesehen. Eine maximale Stromentnahme aus dem Bus durch Busteilnehmer ist auf einen vorgegebenen Wert beschränkt. Das Spannungsversorgungssystem umfasst zumindest zwei parallel an den Bus angeschlossene Versorgungseinheiten gemäß der vorhergehend beschriebenen Art, wobei jede der Versorgungseinheiten dazu ausgelegt ist, Busteilnehmer mittels des Busses mit einer DC-Spannung zu versorgen, wobei jede der Versorgungseinheiten eine Schaltung aufweist, die eingerichtet ist, die aktuelle Stromentnahme aus dem Bus durch ein Kurzschließen des Busses zu erfassen. Dabei schließen die Versorgungseinheiten den Bus selektiv kurz, um die aktuelle Stromentnahme zu erfassen.

Durch das selektive Kurzschließen erfasst jede Stromversorgungseinheit im Spannungsversorgungssystem autonom die aktuelle Stromentnahme aus dem Bus und entscheidet selbstständig, ob eine weitere Energieversorgung auf dem Bus zulässig ist oder nicht.

Bevorzugt wartet jede der Versorgungseinheiten in einer Initialisierungsphase eine individuelle Zufallswartezeit ab, bevor die Schaltung die aktuelle Stromentnahme des Busses erfasst.

Bevorzugt wird anhand eines Vergleichs zwischen der aktuell erfassten Stromaufnahme und dem vorgegebenen Wert der maximalen Stromentnahme aus dem Bus durch Busteilnehmer in jeder Versorgungseinheit entschieden wird, welche der Versorgungseinheiten als Hauptversorgung bzw. Hilfsversorgung im Spannungsversorgungssystem betrieben wird.

Erfindungsgemäß wird erst nach Ablauf einer voreingestellten Startverzögerungszeit in der Initialisierungsphase die Versorgungseinheiten als Hauptversorgungseinheit bzw. Hilfsversorgungseinheit betrieben wird. Auf diese Weise ist sichergestellt, dass eine Stromentnahme-Erfassung nicht gleichzeitig von zwei Versorgungseinheiten im gleichen Beleuchtungssystem durchgeführt wird. Eine Verfälschung von Messergebnissen ist somit verhindert.

In einem weiteren Aspekt der Erfindung wird ein Verfahren zum Betreiben eines Spannungsversorgungssystems gemäß der vorhergehend beschriebenen Art beschrieben. Das Verfahren umfasst die Verfahrensschritte: Initialisieren des Spannungsversorgungssystems, wobei dazu in einer jeden Versorgungseinheit des Spannungsversorgungssystems eine individuelle Zufallswartezeit abgewartet wird; Erfassen einer aktuellen Stromentnahme aus dem Bus durch Busteilnehmer durch selektives Kurzschließen des Busses jeder Versorgungseinheit; Betreiben der jeweiligen Versorgungseinheit entweder in einem Master-Modus oder in einem Slave-Modus, wobei der Modus in Abhängigkeit der aktuell erfassten Stromentnahme aus dem Bus gewählt wird; und Überprüfen einer Zeitdauer, in der der Bus kurzgeschlossen ist, wobei bei Überschreiten einer maximalen Kurzschlusszeitdauer das Verfahren neugestartet wird.

Die Erfindung betrifft somit ein intelligentes Startverfahren zur Spannungsversorgung eines Busses, bevorzugt in einem Beleuchtungssystem. Das Verfahren läuft insbesondere vor Ablauf der Startverzögerung ab, die benötigt wird, um den Bus für eine Datenkommunikation zu stabilisieren. Ein Parallelschalten einer Vielzahl von Versorgungseinheiten ist dabei gewährleistet, ohne dass eine tatsächliche Kommunikation zwischen den DALI-Komponenten nach Ablauf einer Startzeit von 600 Millisekunden stattfindet.

Die Versorgungseinheiten sind dabei als Minimal- Versorgungseinheiten ausgebildet, sodass deren konstanter Ausgangsstrom einem Wert von einem Zehntel, beispielsweise 20 Milliampere, der maximalen Stromentnahme aus dem Bus entspricht. Auf diese Weise können viele Versorgungseinheiten parallel geschaltet werden, ohne die maximale Stromentnahme im DALI-Beleuchtungssystem zu überschreiten. Auf diese Weise sind alle Elemente im Beleuchtungssystem auch während der Startprozedur vor einer Überlastung gesichert.

In dem Verfahren sorgt eine Zufallswartezeit dafür, dass sich eine der Versorgungseinheiten des Busses als Master-Versorgungseinheit qualifiziert. Alle übrigen Versorgungseinheiten sind nach Ablauf der Zufalls-Wartezeit eingerichtet, die Stromentnahme aus dem Bus zu erfassen, wobei dazu ein Kurzschlussschalter von einer Steuereinheit der Versorgungseinheit ermöglicht ist.

Das Erfassen erfolgt bevorzugt, nachdem die die Stromentnahme erfassende Versorgungseinheit eine DC-Spannung für den Bus bereitstellt, wobei bei Überschreiten des vorgegeben Werts der maximalen Stromentnahme die erfassende Versorgungseinheit ihre DC-Spannungsversorgung für den Bus deaktiviert. Dieses Deaktivieren dient dem Schutz der an dem Bus angeschlossenen Busteilnehmer.

Bevorzugt erfolgt das Erfassen erneut, nachdem die die Stromentnahme erfassende Versorgungseinheit eine DC-Spannung für den Bus deaktiviert hat. Ist im Anschluss an das erneute Erfassen die Stromentnahme immer noch oberhalb der maximalen Stromentnahme, so wird die Versorgungseinheit im Master-Modus-Betrieb geschaltet. Dabei wird dann eine Master-Modus-Wartezeit abgewartet und eine Stromentnahme-Erfassung solange durchgeführt, bis die aktuell erfasste Stromentnahme unterhalb der maximalen Stromentnahme ist.

Bevorzugt umfasst das Verfahren zum Betreiben einer Versorgungseinheit im Slave-Modus folgende weitere Verfahrensschritte: Erfassen eines Spannungswerts auf dem Bus durch die Versorgungseinheit; Erneutes Erfassen der aktuellen Stromentnahme aus dem Bus nur für den Fall, dass der erfasste Spannungswert oberhalb eines Referenzspannungswerts liegt; und Betreiben der Versorgungseinheit im Master-Modus für den Fall, dass das erneute Erfassen ergibt, dass die aktuell erfasste Stromentnahme oberhalb eines vorgegebenen Werts einer maximalen Stromentnahme aus dem Bus durch Busteilnehmer ist. Dabei wird im Master-Modus-Betrieb eine Stromentnahme-Erfassung solange durchgeführt, bis die aktuell erfasste Stromentnahme unterhalb der maximalen Stromentnahme ist.

Auf diese Weise wird im Slave-Modus der Versorgungseinheit festgestellt, ob andere Versorgungseinheiten auf den Bus aufgeschaltet sind.

In einer bevorzugten Ausgestaltung umfasst der Slave-Modus die weiteren Verfahrensschritte: Abwarten einer Master-Modus-Wartezeit für den Fall, dass das erneute Erfassen ergibt, dass die aktuell erfasste Stromentnahme unterhalb eines vorgegebenen Werts einer maximalen Stromentnahme aus dem Bus durch Busteilnehmer ist; und erneutes Erfassen des Spannungswertes auf dem Bus, wobei diese Versorgungseinheit ausgeschaltet wird, wenn das erneute Erfassen des Spannungswerts ergibt, dass der erneut erfasste Spannungswert unterhalb des Referenzspannungswerts liegt. Auf diese Weise wird erfasst, dass bereits eine Master-Versorgungseinheit auf den Bus aufgeschaltet ist.

In einer bevorzugten Ausgestaltung wird die Stromversorgungseinheit in einem Master-Modus mittels folgender Verfahrensschritte betrieben: Abwarten einer Master-Modus-Wartezeit; Erneutes Erfassen der aktuellen Stromentnahme aus dem Bus; und Aufheben des Kurzschlusses des Busses für den Fall, dass das erneute Erfassen ergibt, dass die erfasste aktuelle Stromentnahme unterhalb eines vorgegebenen Werts einer maximalen Stromentnahme aus dem Bus durch Busteilnehmer ist.

Auf diese Weise wird erreicht, dass zunächst eine Master-Modus-Wartezeit abgewartet wird, um nicht mit einer bereits im Master-Modus befindlichen Versorgungseinheit des Spannungsversorgungssystems zu konkurrieren. In dieser Wartezeit, wird jede einzelne der Versorgungseinheiten im Slave-Modus deaktiviert, sollte die erfasste Stromentnahme aus dem Bus oberhalb einer maximalen Stromaufnahme, beispielsweise 250 mA, liegen. Auf diese Weise ist eine Stromüberlastung ausgeschlossen.

Bevorzugt umfasst der Master-Modus-Betrieb die weiteren Verfahrensschritte: Erfassen eines Spannungswerts auf dem Bus; Abwarten einer Zufalls-Wartezeit für den Fall, dass das Erfassen ergibt, dass der erfasste Spannungswert oberhalb eines Referenzspannungswerts liegt; Kurzschließen des Busses; und Erneutes Erfassen der aktuellen Stromentnahme aus dem Bus.

Mit dem Verfahren wird eine Quasi-Kommunikation zwischen parallel geschalteten Versorgungseinheiten in einem Spannungsversorgungssystem ermöglicht, ohne dass tatsächlich eine Startprozedurzeit bis zum Erhalten eines stabilen Datenbusses abgewartet wird.

In einem weiteren Aspekt wird ein Busteilnehmer bereitgestellt, der an einen Gebäudetechnikbus anschließbar ist, aufweisend eine Versorgungseinheit und eine Steuereinheit, wobei die Versorgungseinheit dazu eingerichtet ist, einen Messstrom auf den Gebäudetechnikbus auszugeben, und wobei die Steuereinheit dazu eingerichtet ist, einen Busstrom auf dem Gebäudetechnikbus zu erfassen und auszuwerten und auf Basis der Auswertung zu bestimmen, ob ein Betriebsstrom durch die Versorgungseinheit auf den Gebäudetechnikbus ausgegeben wird.

Die Steuereinheit kann die Versorgungseinheit entsprechend der Auswertung ansteuern, den Betriebsstrom auszugeben oder eine Stromausgabe zu deaktivieren.

Die Steuereinheit kann bei der Auswertung auf Basis des erfassten Busstroms eine Anzahl von an den Gebäudetechnikbus angeschlossenen Busteilnehmern ermitteln, und bestimmen ob ein von der ermittelten Anzahl von Busteilnehmern ausgebbarer Gesamt-Busstrom innerhalb einer Bus-Spezifikation liegt.

Die Steuereinheit kann die Versorgungseinheit insbesondere in einer Testphase ansteuern, den Messstrom an den Gebäudetechnikbus auszugeben.

Die Steuereinheit kann die Versorgungseinheit ansteuern, insbesondere nach der Testphase, einen Betriebsstrom an den Gebäudetechnikbus auszugeben, wenn der von der ermittelten Anzahl von Busteilnehmern ausgebbare Gesamt-Busstrom innerhalb der Bus-Spezifikation liegt.

Die Steuereinheit kann die Versorgungseinheit und/oder die Stromausgabe an den Gebäudetechnikbus durch die Versorgungseinheit deaktivieren, wenn der von der ermittelten Anzahl von Busteilnehmern ausgebbare Gesamt-Busstrom außerhalb der Bus-Spezifikation liegt.

Die Steuereinheit kann bestimmen, ob der von der ermittelten Anzahl von Busteilnehmern ausgebbare Gesamt-Busstrom einen Schwellenwert, insbesondere 150 - 300 Milliampere, vorzugsweise 250 Milliampere, überschreitet, wobei die Bus-Spezifikation insbesondere den Schwellenwert umfasst.

Die Steuereinheit kann ein bestimmtes Bussignal über den Gebäudetechnikbus empfangen und auswerten, und die Testphase nach Empfang des bestimmten Bussignals starten, und insbesondere die Versorgungseinheit ansteuern, den Messstrom auszugeben.

Die Versorgungseinheit kann den Messstrom und/oder den Betriebsstrom erzeugen und an den Gebäudetechnikbus ausgeben.

Die Steuereinheit kann den Busstrom zu einem zufälligen Zeitpunkt, vorzugsweise innerhalb der Testphase erfassen.

In wiederum einem weiteren Aspekt wird eine Leuchte mit einem Busteilnehmer, wie er hierin beschrieben ist, bereitgestellt.

In wiederum einem noch weiteren Aspekt wird ein Bussystem für Gebäudetechnikgeräte, insbesondere DALI-Bussystem, bereitgestellt, aufweisend einen Gebäudetechnikbus, insbesondere einen DALI-Bus, und wenigstens zwei Busteilnehmer, vorzugsweise wie vorstehend beschrieben, die an den Gebäudetechnikbus angeschlossen sind und die jeweils eine Versorgungseinheit aufweisen, wobei die Versorgungseinheiten unabhängig voneinander betreibbar sind, wobei jeder der Busteilnehmer dazu eingerichtet ist, einen von der jeweiligen Versorgungseinheit erzeugten Messstrom an den Gebäudetechnikbus auszugeben, und wobei die wenigstens zwei Busteilnehmer so mit dem Gebäudetechnikbus verbunden sind, dass sich angelegte Messströme überlagern, insbesondere addieren.

Die Busteilnehmer können jeweils eine Steuereinheit aufweisen, die einen an dem Gebäudetechnikbus anliegenden Busstrom erfasst und auswertet, insbesondere innerhalb einer Testphase. Vorzugsweise kann die Steuereinheit auf Basis des erfassten Busstroms eine Anzahl von an den Gebäudetechnikbus angeschlossenen Busteilnehmern zu ermitteln. Bei den ermittelten Busteilnehmern kann es sich bevorzugt um die Busteilnehmer handeln, die einen Beitrag zu dem Busstrom liefern. Weitere Busteilnehmer können vorhanden sein.

Jede Steuereinheit kann dazu eingerichtet sein, auf Basis der ermittelten Anzahl von Busteilnehmern zu bestimmen, ob ein Schwellenwert für einen Gesamt-Busstrom überschritten wird, wenn die ermittelte Anzahl von Busteilnehmern jeweils statt des Messstroms einen Betriebsstrom an den Gebäudetechnikbus ausgibt.

Jede Steuereinheit kann die Versorgungseinheit und/oder eine Stromausgabe durch die Versorgungseinheit an den Gebäudetechnikbus deaktivieren, wenn der Schwellenwert überschritten würde.

Das Bussystem kann keine zentrale Stromversorgung aufweisen.

Der Schwellenwert für einen zulässigen Gesamt-Busstrom kann mit 150 - 300 Milliampere, insbesondere 250 Milliampere definiert sein.

Die unabhängig betreibbaren dezentralen Versorgungseinheiten der wenigstens zwei Busteilnehmer können den Gesamt-Busstrom bereitstellen.

In noch einem weiteren Aspekt wird ein Bussystem für Gebäudetechnikgeräte, insbesondere ein DALI-Bussystem, bereitgestellt, aufweisend einen Gebäudetechnikbus, insbesondere einen DALI-Bus, wenigstens zwei Busteilnehmer, vorzugsweise wie vorstehend beschrieben, eine dezentrale Stromversorgung für den Gebäudetechnikbus, die durch wenigstens zwei Versorgungseinheiten wenigstens zweier Busteilnehmer bereitgestellt wird, wobei die dezentrale Stromversorgung dazu eingerichtet ist, wenigstens einen Gesamt-Busstrom anteilig je Busteilnehmer an den Gebäudetechnikbus auszugeben, und wobei jeder der wenigstens zwei Busteilnehmer eine Steuereinheit aufweist, die testet, ob der von den Versorgungseinheiten ausgebbare Gesamt-Busstrom innerhalb einer Bus-Spezifikation liegt.

Die Steuereinheit kann dazu ausgelegt sein, eine anteilige Ausgabe des Gesamt-Busstroms eines Busteilnehmers der wenigstens zwei Busteilnehmer zu deaktivieren, wenn der Test ergibt, dass der Gesamt-Busstrom inklusive der anteiligen Ausgabe außerhalb der Bus-Spezifikation liegt.

Die wenigstens eine Steuereinheit kann testen, ob der zulässige Gesamt-Busstrom die Bus-Spezifikation von 150 - 300 mA, insbesondere 250 Milliampere, überschreitet.

In noch einem weiteren Aspekt wird ein Verfahren zum Betreiben eines Busteilnehmers bereitgestellt, der an einen Gebäudetechnikbus angeschlossen ist, wobei
eine Versorgungseinheit einen Messstrom auf den Gebäudetechnikbus ausgibt, und wobei eine Steuereinheit einen Busstrom auf dem Gebäudetechnikbus erfasst und auswertet und auf Basis der Auswertung bestimmt, ob ein Betriebsstrom durch die Versorgungseinheit auf den Gebäudetechnikbus auszugeben ist.

In wiederum einem weiteren Aspekt wird ein Verfahren zum Betrieb von Gebäudetechnikgeräten, insbesondere ein DALI-Bussystem, bereitgestellt, wobei wenigstens zwei Busteilnehmer, vorzugsweise wie vorstehend beschrieben, an einen Gebäudetechnikbus angeschlossen sind und jeweils eine Versorgungseinheit aufweisen, wobei die Versorgungseinheiten unabhängig voneinander betrieben werden, wobei jeder der Busteilnehmer einen von der jeweiligen Versorgungseinheit erzeugten Messstrom an den Gebäudetechnikbus ausgibt, und wobei die wenigstens zwei Busteilnehmer so mit dem Gebäudetechnikbus verbunden sind, dass sich angelegte Messströme überlagern, insbesondere addieren.

In noch einem weiteren Aspekt wird ein Verfahren zum Betrieb von Gebäudetechnikgeräten bereitgestellt, wobei eine dezentrale Stromversorgung für den Gebäudetechnikbus, durch wenigstens zwei Versorgungseinheiten wenigstens zweier Busteilnehmer, vorzugsweise nach Anspruch 1, bereitgestellt wird, wobei die dezentrale Stromversorgung wenigstens einen Gesamt-Busstrom anteilig je Busteilnehmer an den Gebäudetechnikbus auszugeben, und wobei jeder der wenigstens zwei Busteilnehmer eine Steuereinheit aufweist, die testet, ob der von den Versorgungseinheiten ausgebbare Gesamt-Busstrom innerhalb einer Bus-Spezifikation liegt.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als Maßstabsgetreu anzusehen, es können einzelne Elemente der Figuren übertrieben groß bzw. übertrieben vereinfacht dargestellt sein.

Es zeigen:
- Fig. 1: eine Versorgungseinheit gemäß dem Stand der Technik.
- Fig.2: ein Ausführungsbeispiel einer erfindungsgemäßen Versorgungseinheit.
- Fig. 3: ein Ausführungsbeispiel eines Beleuchtungssystems mit einem erfindungsgemäßen Spannungsversorgungssystem.
- Fig. 4: ein beispielhaftes Ablaufdiagramm eines erfindungsgemäßen Verfahrens zum Betreiben eines Spannungsversorgungssystems.
- Fig. 5: ein beispielhaftes Ablaufdiagramm einer Initialisierungsphase des erfindungsgemäßen Verfahrens gemäß Fig. 4.
- Fig. 6: ein beispielhaftes Ablaufdiagramm einer ersten Stromentnahme-Erfassen-Phase des erfindungsgemäßen Verfahrens gemäß Fig. 4.
- Fig. 7: ein beispielhaftes Ablaufdiagramm eines Slave-Modus-Betriebs des erfindungsgemäßen Verfahrens gemäß Fig. 4.
- Fig. 8: ein beispielhaftes Ablaufdiagramm eines Master-Modus-Betriebs des erfindungsgemäßen Verfahrens gemäß Fig. 4.
- Fig. 9: ein weiteres Ausführungsbeispiel eines Beleuchtungssystems mit einem erfindungsgemäßen Spannungsversorgungssystem.
- Figs. 10a und 10b: eine exemplarische Ausgestaltung des weiteren Ausführungsbeispiels gegenüber dem Stand der Technik.
- Fig. 11: schematisch einen Teil einer Versorgungseinheit, wie sie in dem weiteren Ausführungsbeispiel zum Einsatz kommt.
- Fig. 12: ein Verfahren, wie es mit Blick auf Fig. 9 beschrieben wurde.
- Fig. 13: schematisch und exemplarisch einen Verfahrensablauf gemäß des weiteren Ausführungsbeispiels als Flussdiagram.

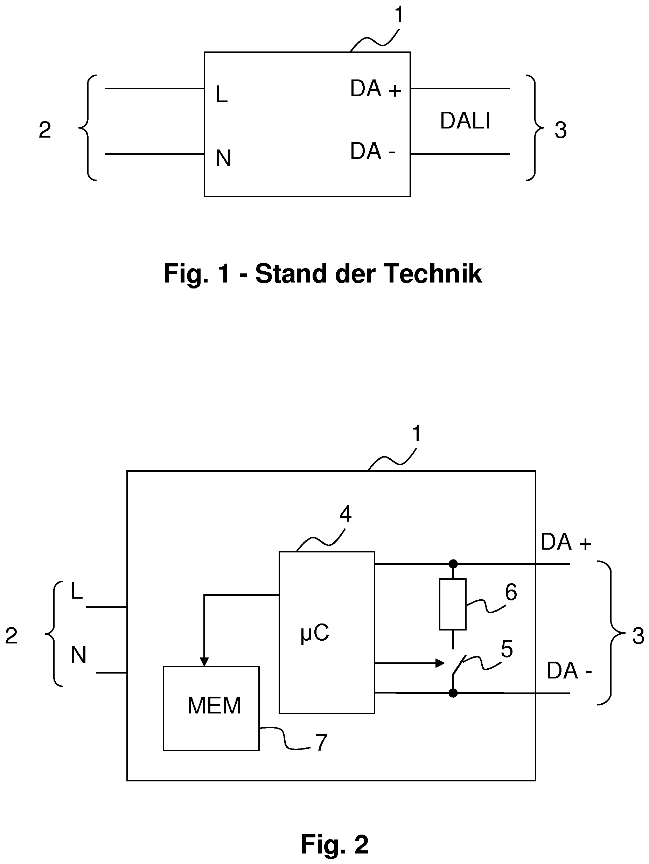

In Fig. 1 ist eine Versorgungseinheit 1 gemäß dem Stand der Technik dargestellt. Die Versorgungseinheit 1 umfasst Eingangsanschlüsse 2, dargestellt als Netzleitung L und die Neutralleitung N. Erfindungsgemäß nicht ausgeschlossen ist die Verwendung einer Versorgungseinheit 1, die zusätzlich einen Schutzleiter PE aufweist. Die Versorgungseinheit 1 weist zudem eine DALI-Schnittstelle auf, die hier als Bus 3 mit den Leitungen DA+ und DA- dargestellt ist. Derartige DALI-Versorgungseinheiten dienen zur Versorgung eines Busses 3 mit einer DC-Spannung, an dem DALI-Betriebsgeräte, elektronische Vorschaltgeräte oder Leistungsdimmer, Aktoren oder Sensoren als Busteilnehmer angeschlossen sind. Die Versorgungseinheit gemäß Fig. 1 ist eingerichtet, den Bus 3 mit einem Strom von 240 Milliampere zu versorgen. Die Versorgungseinheit ist die einzige Versorgung in einem Beleuchtungssystem gemäß dem Stand der Technik. Dabei wird eine Netzversorgungsspannung von 220 Volt bis 240 Volt an die Eingangsanschlüsse 2 angelegt. Die Netzversorgungsspannung hat typischerweise eine Netzfrequenz von 50 Hertz oder 60 Hertz. Die Versorgungseinheit ist daher ausgelegt, eine Leistung von 5 Watt abzugeben. Die Ausgansspannung beträgt 16 Volt bei +/- 5% Toleranz. Das DALI-Signal ist kein SELV.

Insbesondere wird mit einer derartigen DALI-Versorgungseinheit der DALI-Standard IEC 62386 eingehalten.

Nachteilig an dem bestehenden DALI-System ist, dass keine Parallelschaltung von derartigen DALI- Versorgungseinheiten 1 möglich ist, denn der Ausgangsstrom darf eine maximale Stromentnahme von 250 Milliampere aus dem Bus 3 nicht übersteigen. Eine Kommunikation zwischen den einzelnen DALI-Versorgungseinheiten ist insbesondere bis zum Aufbau eines stabilisierten DALI-Datenkommunikationsbusses nicht möglich, sodass auch ein späteres Regulieren der DALI-Versorgungseinheit nicht verhindern würde, dass die im Beleuchtungssystem A befindlichen Elemente ggf. mit einem zu großen Strom betrieben würden, was deren Beschädigung oder sogar Zerstörung bedeuten würde.

Die DALI-Versorgungseinheit 1 gemäß dem Stand der Technik ist für eine Vielzahl von Anwendungen in der Beleuchtungstechnik überdimensioniert. Eine kostengünstigere modulare und flexible Versorgung des Busses 3 für ein minimalistisches Beleuchtungssystem ist daher wünschenswert.

Erfindungsgemäß wird daher ein alternativer Ansatz zur Versorgung eines Busses 3 mit einer DC-Spannung vorgeschlagen. Dabei soll eine Quasi-Kommunikation zwischen parallelgeschalteten Versorgungseinheiten 1 ermöglicht werden. Die DALIstandardisierte maximale Stromentnahme von maximal 240 mA wird auch bei den erfindungsgemäß vorgeschlagenen Versorgungseinheiten nicht überschritten. Eine individuelle Anpassung an existierende DALI-Beleuchtungssysteme ist damit möglich, wobei eine individuelle Clusterung der Beleuchtungssysteme nunmehr ermöglicht wird.

In Fig. 2 ist eine erfindungsgemäße Versorgungseinheit 1 dargestellt. Zusätzlich zu den in Fig. 1 dargestellten Anschlüssen 2, 3 ist erfindungsgemäß in der Versorgungseinheit 1 eine Steuereinheit 4 vorgesehen. Die Steuereinheit 4 ist beispielsweise als Mikrocontroller, als ASIC als FPGA oder CPLD ausgebildet. Die Steuereinheit 4 ist mit dem Bus 3 verbunden. In der Versorgungseinheit 1 ist zudem ein Kurzschlussschalter 5 vorgesehen. Der Kurzschlussschalter 5 ist vorgesehen, um den Bus 3 kurzzuschließen. Dazu weist der Kurzschlussschalter 5 einen ersten Schaltzustand I auf, um die Leitung DA+ und DA- miteinander zu verbinden. In einem zweiten Schaltzustand II hebt der Kurzschlussschalter 5 eine Verbindung zwischen den Stromversorgungsleitungen DA+ und DA- auf. Das Wechseln des Schaltzustands des Kurzschlussschalters 5 wird durch die Steuereinheit 4 veranlasst. Dazu wird ein Schaltsignal durch die Steuereinheit 4 generiert. Mittels des Kurzschlussschalters 5 kann nun eine Stromentnahme aus dem Bus 3, der durch die Versorgungsleitungen DA+, DA- fließt, erfasst werden. Hierzu ist ein Messelement 6 in der Verbindung zwischen den Versorgungsleitungen DA+, DA- vorgesehen. Die Steuereinheit 4 ist dazu vorgesehen, einen Spannungsabfall über beispielsweise einem als Strom-Messwiederstand ausgebildeten Messelement 6 bei Kurzschluss des Kurzschlussschalters 5 zu erfassen. Alternativ erfolgt mittels des Messelements 6 eine galvanische Kopplung, beispielsweise mittels gekoppelter Spulen, oder alternativ mittels eines Optokopplers. Die erfasste Stromentnahme aus dem Bus 3 wird in der Steuereinheit 4 ausgewertet. In Abhängigkeit der Höhe des Stromwerts und im Vergleich zu eines vorgegebenen Werts Iₓ für eine maximale Stromentnahme, beispielsweise 240 mA gemäß dem DALI-Standard IEC 62389, erfolgt sodann das Bereitstellen einer Energieversorgung auf dem Bus 3 durch die Versorgungseinheit 3 und ein Öffnen des Schalters 5 oder ein Nichtbereitstellen der Energieversorgung und Öffnen des Schalters 5.

Erfindungsgemäß ist in der Versorgungseinheit 1 ein Speicherelement 7 vorgesehen. In diesem Speicherelement 7 sind beispielsweise DALI-Adressen, DALI-Beleuchtungsgruppen, DALI-Beleuchtungsszenarien und/oder Dimmwerte abgelegt, die für eine spezifische Einstellung des Beleuchtungssystems A vorgesehen sind. Bei einem Wechsel eines Betriebsgeräts 8 in dem Beleuchtungssystem A kann nun mittels des Speichers 7 die Einstellung des Beleuchtungssystems A gesichert werden. Alle relevanten Daten der an die Beleuchtungssysteme A angeschlossenen Elemente 8 können somit im Speicher 7 abgespeichert werden. Somit dienen diese Daten im Speicher 7 als backup-Daten für den Fall, dass ein Betriebsgerät im Beleuchtungssystem A zu ersetzen ist.

Auf diese Weise können auch grundlegende Funktionalitäten beispielsweise Firmware-Einstellungen oder Reglementierungen im Speicher 7 abgelegt sein. Wird ein Betriebsgerät ersetzt, so werden diese Daten aus dem Speicher 7 geladen und stehen ohne aufwendige Initialisierung oder Installation sofort im Beleuchtungssystem bereit. Zusätzliche Funktionen wie Dimmen, Gruppenbeleuchtung und Notfallbeleuchtungs-Szenarien können auch im Speicher 7 enthalten sein.

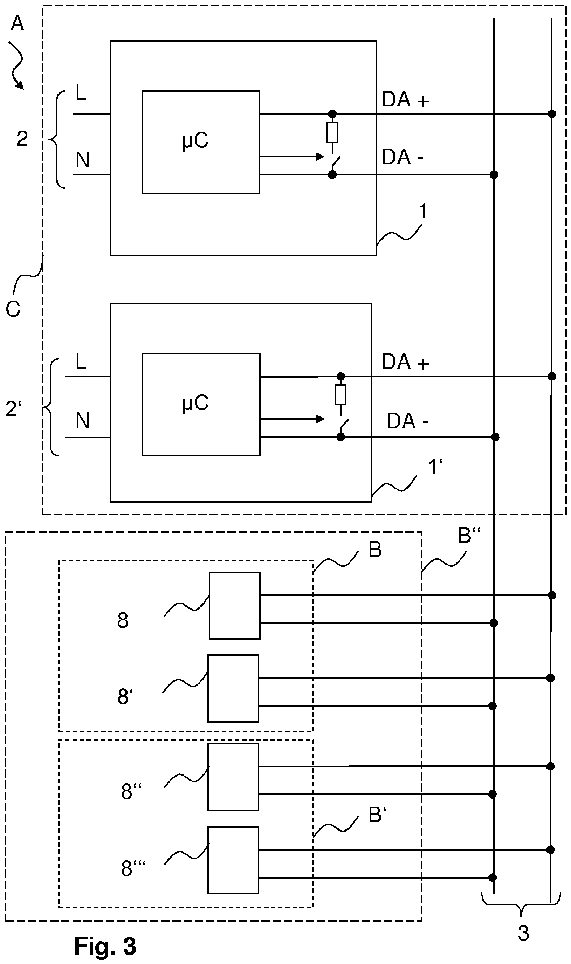

In Fig. 3 ist ein erfindungsgemäßes Beleuchtungssystem A dargestellt. Das Beleuchtungssystem A umfasst ein Spannungsversorgungssystem C bestehend aus einer ersten Versorgungseinheit 1 und einer zweiten Versorgungseinheit 1', wie sie beispielsweise in der Fig. 2 dargestellt sind. Der Bus 3 dient dazu, die Elemente 8, 8', 8' und 8''' mit einer DC-Spannung aus den Versorgungseinheiten 1, 1' zu versorgen. Die Elemente 8, 8', 8' und 8''' sind dabei beispielsweise Betriebsgeräte für Leuchtmittel oder Leistungsdimmer oder elektronische Vorschaltgeräte oder Sensorelemente oder Betriebsgeräte für Aktoren in dem Beleuchtungssystem A.

Das Beleuchtungssystem A gemäß Fig. 3 ist DALI-standardisiert. Das Beleuchtungssystem A ist ein vergleichsweise kleines Beleuchtungssystem A da nur vier Elemente zu betreiben sind. Diese vier Beleuchtungselemente 8, 8', 8' und 8''' können nun unterschiedlich zusammengeschaltet werden, als in verschiedenen Clustern betrieben werden. Beispielsweise könnte ein Cluster B aus den zwei Elementen 8 und 8' gebildet werden. Ein derartig kleines Cluster B kann mittels einer der zwei Versorgungseinheiten 1, 1' betrieben werden. Ein weiteres Cluster B' kann aus den Elementen 8" und 8''' gebildet sein und kann auch durch bereits eine der Versorgungseinheiten 1 oder 1' mit Strom versorgt werden. Beispielsweise kann auch ein drittes Cluster B" gebildet werden, in welchem alle vier Beleuchtungselemente 8, 8', 8' und 8''' gleichzeitig im Beleuchtungssystem A zu betreiben sind. In einem derartigen Cluster B" sind mindestens zwei Versorgungseinheiten 1, 1' vorzusehen, um den dazu benötigten Strom zu erzeugen.

Die Clusterung erfolgt beispielsweise bei Installation oder Planung des Beleuchtungssystems A. Um sich in einem so frühen Stadium nicht festlegen zu müssen, kann nun mittels parallelschaltbarer Versorgungseinheiten 1, 1' eine flexible, modulare und veränderbare Struktur erhalten werden.

Die Anzahl der Versorgungseinheiten 1, der Elemente 8 und der Cluster B ist lediglich beispielhaft und erfindungsgemäß nicht auf diese Anzahl beschränkt.

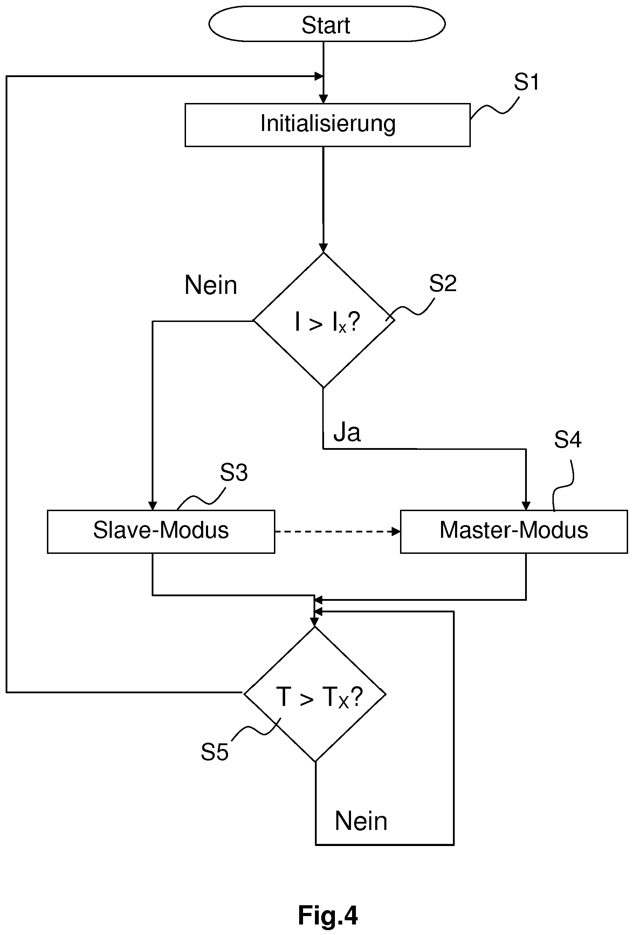

Um dieses Beleuchtungssystem A nach dem DALI Standard betreiben zu können, muss sichergestellt werden, dass zu keinem Zeitpunkt die aktuelle Stromentnahme oberhalb eines vorgegebenen Werts Iₓ für eine maximale Stromentnahme steigt aber alle Elemente 8 ausreichend mit Energie versorgt werden. Zudem ist sicherzustellen, dass die Versorgung innerhalb der Wartezeit von 600 Millisekunden bereitsteht. Dies wird durch ein Verfahren zum Betreiben des Spannungsversorgungssystems C ermöglicht, so wie es beispielhaft in den Fig. 4 bis Fig. 8 dargestellt ist.

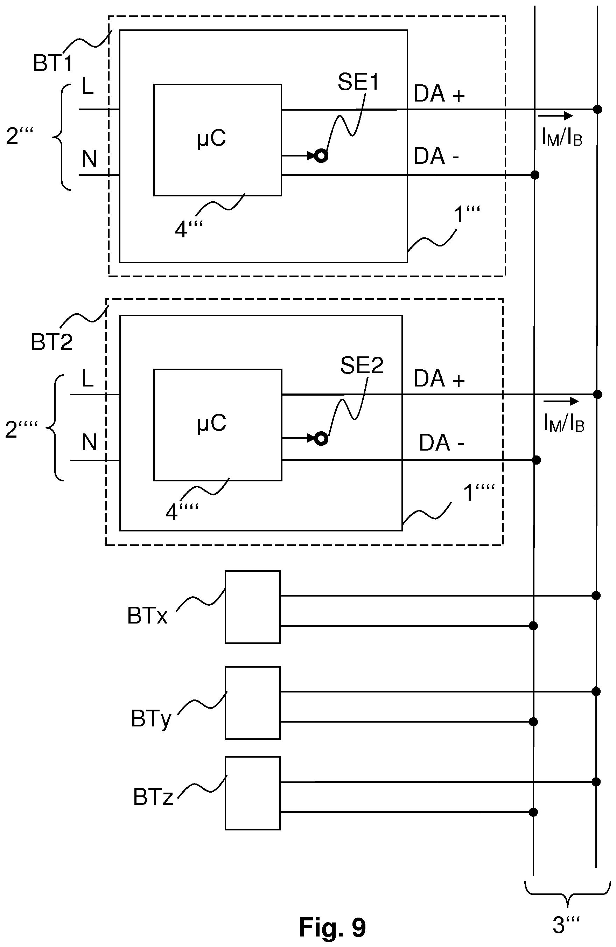

In Fig. 9 ist ein weiteres Ausführungsbeispiel eines Beleuchtungssystems mit parallelgeschalteten Versorgungseinheiten 1''', 1'''' gezeigt. Die Versorgungseinheiten 1"', 1'''' sind hier vorzugsweise innerhalb jeweils eines Busteilnehmers BT1, BT2 angeordnet. Weitere Busteilnehmer BTx, BTy, BTz, die sich von den Busteilnehmern BT1, BT2 unterscheiden können, und insbesondere keine Versorgungseinheit aufweisen müssen, sind ebenfalls dargestellt.

Auch die Versorgungseinheiten 1"', 1'''' werden über Eingangsanschlüsse 2''', 2'''' versorgt und sind mit einem Bus 3''' verbunden. Wie dargestellt, ist in jedem der Busteilnehmer BT1, BT2 eine Steuereinheit 4''', 4'''' vorgesehen, die jeweils die Versorgungseinheiten 1''', 1'''' ansteuern können. Dazu kann durch die jeweilige Steuereinheit 4''', 4'''' z.B. ein Ansteuersignal an einen Steuereingang SE1 bzw. SE2 der Versorgungseinheiten 1''', 1'''' ausgegeben werden.

Gemäß des Ausführungsbeispiels nach Fig. 9 wird nun eine elektrische Versorgung des Busses 3''' durch die wenigstens zwei Versorgungseinheiten 1''', 1'''' der wenigstens zwei Busteilnehmer BT1, BT2 übernommen, die als dezentrale unabhängige Stromversorgung fungieren. Dabei ist zu verstehen, dass auch noch weitere Busteilnehmer BTx, BTy, BTz analog zu den Busteilnehmern BT1, BT2 ausgestaltet sein können, so dass die dezentrale unabhängige Stromversorgung mehr als die Versorgungseinheiten 1"', 1'''' umfasst. Die Versorgungseinheiten 1"', 1'''' der wenigstens zwei Busteilnehmer BT1, BT2 dienen dann zusammen als Stromversorgungen für den Bus 3"', so dass die Stromversorgung nicht mehr zentral durch eine entsprechend dimensionierte zentrale Bus-Versorgungseinheit erfolgen muss.

Die Versorgungseinheiten 1''', 1'''' können daher kleiner dimensioniert sein als die zentrale Bus-Versorgungseinheit. Die Versorgungseinheiten 1''', 1'''' können auch auf andere Weise den Busteilnehmern zugeordnet sein. So kann ein Busteilnehmer keine Versorgungseinheit 1"', 1'''', aufweisen, während ein anderer Busteilnehmer mehr als eine Versorgungseinheit 1''', 1'''' aufweisen kann.

Motiviert wird die dezentrale Stromversorgung wiederum dadurch, dass ein zentrales Bus-Stromversorgungsgerät verhältnismäßig hohe Kosten verursacht, die sich erst bei einer entsprechend hohen Anzahl von Busteilnehmern rentieren. Bei einer gewissen kleineren Anzahl von Busteilnehmern ist es, wie eingangs bereits erwähnt, günstiger, entsprechend kleinere und billigere Stromversorgungen zu verwenden.

So ist das in Fig. 9 dargestellte Bussystem mit wenigstens zwei Versorgungseinheiten 1''', 1'''' ausgestattet, die die dezentrale Stromversorgungen bereitstellen. Die Busteilnehmer BT1, BT2 und/oder die Versorgungseinheiten 1"', 1'''' sind vorzugsweise derart angeordnet, dass sich die bereitgestellten Ströme auf dem Bus 3''' überlagern können zu einem Gesamt-Busstrom.

Die Busteilnehmer BT1, BT2, die die dezentrale Stromversorgung für den Bus 3''', der bevorzugt ein Gebäudetechnikbus ist, bereitstellen, können eine Intelligenz in Form der Steuereinheiten 4"', 4'''' (vorzugsweise IC, ASIC oder Mikrokontroller (bezeichnet als µC)) aufweisen. Damit können die Busteilnehmer BT1, BT2 jeweils testen, ob der sich ergebender Gesamt-Busstrom auf dem Bus 3''' und insbesondere ein zu erwartender Gesamt-Busstrom innerhalb einer Bus-Spezifikation, insbesondere einer DALI-Bus-Spezifikation befindet. Das bedeutet, dass z.B. durch die Steuereinheit 4''', 4'''' getestet wird, ob ein Schwellenwert für einen Strom, z.B. ein Schwellenwert für einen maximal zulässigen Gesamt-Busstrom von z.B. 150 bis 350 Milliampere, vorzugsweise 250 Milliampere, überschritten wird, wenn die wenigstens zwei Versorgungseinheiten 1"', 1'''' einen Betriebsstrom zusätzlich oder anstelle eines Messstroms auf den Bus 3''' ausgeben.

Falls erkannt wird, dass der Schwellenwert erreicht bzw. überschritten wird, also eine Überschreitung des zulässigen Gesamt-Busstroms erfolgt, ergreift die Intelligenz, d.h. die Steuereinheiten 4''', 4'''' in den Busteilnehmern BT1, BT2 Maßnahmen, um den sich letztendlich ergebenden Gesamt-Busstrom zu verringern.

In einer spezifischen Ausgestaltung testet die Intelligenz in einer Trainings- oder Testphase einen auf dem Bus 3''' anliegenden Busstrom. Das bedeutet, dass zumindest eine der Steuereinheiten 4''', 4'''' in einem definierten Zeitraum, dessen Beginn z.B. durch den Empfang eines Signals durch die Steuereinheiten 4''', 4'''' festgelegt wird und dessen Zeitdauer vorgegeben ist (z.B. in einem durch die Steuereinheit 4''', 4'''' zugreifbaren Speicher), den auf dem Bus 3''' anliegenden Strom erfasst und auswertet. Jeder Busteilnehmer BT1, BT2 stellt dabei fest, ob angesichts des maximal zulässigen Gesamt-Busstroms der Beitrag seiner jeweiligen dezentralen Versorgungseinheit 1"', 1'''' notwendig ist.

Der Ablauf ist vorzugsweise wie folgt:
Jeder Busteilnehmer BT1, BT2 mit dezentraler Stromversorgung weist wenigstens eine Stromquelle auf, z.B. in der Versorgungseinheit 1"', 1'''', die in wenigstens zwei unterschiedlichen Strompegeln konstant Strom liefern kann.

Ein erster von der Versorgungseinheit 1"', 1'''' ausgegebener Strompegel ist dabei ein Messstrom I_{M}. Dieser Messstrom I_{M} wird von den Versorgungseinheiten 1"', 1'''' in der Testphase ausgegeben. Dieser Messstrom I_{M} kann relativ gering sein, z.B. 10-25 Milliampere.

Jedem Busteilnehmer BT1, BT2 wird, beispielsweise durch einen (lokalen) Pseudozufallsgenerator, ein Zeitpunkt zugewiesen, zu dem er testet/misst, wie die gerade zur Verfügung stehende Gesamtstromkapazität am Bus 3''' ist. Dazu kann der Busteilnehmer BT1, BT2 den Bus 3''' maximal belasten. Der Busteilnehmer BT1, BT2, bzw. die Steuereinheit 4''', 4'''', kann dann erfassen, welcher Strom sich auf dem Bus 3''' einstellt. In der Testphase ist es von Bedeutung, dass die jeweiligen Busteilnehmer BT1, BT2 bzw. die Versorgungseinheiten 1''', 1'''' jeweils nur die Stromquelle aktiv schalten, die den Messstrom I_{M} ausgibt, die also den geringeren Konstantstrom bereitstellt (beispielsweise 10 mA im Vergleich zu 50 mA bei z.B. einer Gesamtstrommaximallast von 250 mA).

Wenn ein Busteilnehmer BT1, BT2 testet, welcher Gesamt-Busstrom sich einstellt, kann er, bei bekanntem Pegel des Messstroms I_{M}, feststellen, welche Anzahl an dezentralen Stromversorgungen bzw. Busteilnehmern BT1, einen Messstrom I_{M} BT2 an den Bus 3''' ausgibt. So kann der Busteilnehmer BT1, BT2 darauf schließen, ob sich bei einschalten einer zweiten, größeren und/oder zusätzlichen Stromquelle, die einen Betriebsstrom I_{B} bereitstellt, auf dem Bus 3''' ein Busstrom einstellt, der innerhalb oder außerhalb der Bus-Spezifikation, insbesondere der DALI- Spezifikation, liegt. Dabei ist dem Busteilnehmer bekannt, welcher Betriebsstrom von jedem Busteilnehmer BT1, BT2 ausgegeben wird. Die größere Stromquelle liefert alternativ oder zusätzlich den Betriebsstrom I_{B}, der vorzugsweise 10-70 Milliampere und vorzugsweise 15, 25, 40 50, 65, 75, 90, 105, 125, oder 140 Milliampere betragen kann.

So kann darauf geschlossen werden, ob der gerade beurteilende/messende/testende Busteilnehmer BT1, BT2 mit dezentraler Stromversorgung tatsächlich einen Beitrag liefern muss. Wenn dies nicht der Fall ist, schaltet sich der testende Busteilnehmer BS1, BS2 ab, bzw. deaktiviert die Ausgabe eines durch Versorgungseinheit 1"', 1'''' bereitgestellten Stroms an den Bus 3'''.

Nachdem alle Busteilnehmer BT1, BT2 die Testphase durchlaufen haben, ist das Bussystem konfiguriert und ggf. wird nur eine Untergruppe an Busteilnehmern BT1, BT2 mit dezentraler Stromversorgung im eigentlichen Betriebsfall nach der Testphase ihren Betriebsstrom I_{B} ausgeben.

Nach Ablauf der Trainingsphase schalten also alle Busteilnehmer BT1, BT2, die erkannt haben, dass sie einen Beitrag liefern sollen, jeweils den Betriebsstrom I_{B} aktiv und es wird sich ein Gesamtstrom einstellen, der im Bereich des gesamt zulässigen Stroms liegt. Der Betriebsstrom I_{B} kann alternativ oder zusätzlich zum Messstrom I_{M} ausgegeben werden.

Zudem ist es möglich, dass die Testphase wiederholt durchlaufen wird, z.B. dann wenn bestimmte Busparameter, die Voraussetzung für die Messung sind, nicht vorliegen. Der Beginn der Testphase kann insbesondere dem Busteilnehmer BT1, BT2 extern vorgegeben werden, z.B. durch ein Bussignal von einem Bus-Master. Die Testphase kann jedoch auch automatisiert durch den Busteilnehmer BT1, BT2 gestartet werden, z.B. ab einem vorbestimmten Zeitpunkt oder innerhalb einer vorbestimmten Zeitdauer, ab der der Busteilnehmer BT1, BT2 mit einer Versorgungsspannung versorgt wird.

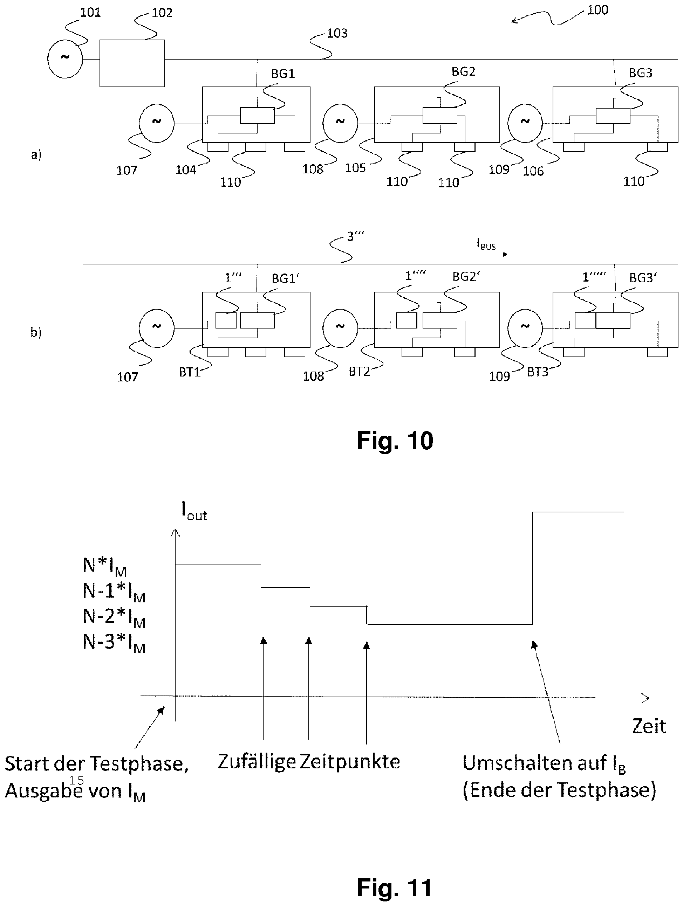

Mit Bezug auf Fig. 10a ist zum bessern Vergleich ein Beleuchtungssystem 100 gezeigt, wie es nach dem Stand der Technik vorgesehen ist. Dabei wird ausgehend von einer Versorgungsspannungsquelle 101, insbesondere einer Wechselspannung beziehungsweise einer AC-Spannung, eine Busversorgungseinheit 102 gespeist. Die Busversorgungseinheit 102 ist vorgesehen, den Bus 103 mit der Busspannung bzw. dem Busstrom I_{BUS} zu versorgen. Die Busversorgungseinheit 102 ist dabei spezifisch für die Versorgung des Busses 103 ausgestaltet und insbesondere als DALI-Busversorgungseinheit ausgelegt.

Weiter sind Busteilnehmer 104, 105, 106 dargestellt, die jeweils ebenfalls ausgehend von einer Spannungsversorgung 107, 108, 109 gespeist werden. Die Spannungsversorgungen 107, 108, 109 dienen also insbesondere zum Betrieb der Busteilnehmer 104, 105, 106 und werden für den Busteilnehmerbetrieb, zum Beispiel zum Betreiben von Betriebsmitteln 110 wie z.B. Leuchtmitteln, Sensoren, Aktoren, ... usw. verwendet. Jeder der Busteilnehmer 104, 105, 106 weist ein Betriebsgerät BG1, BG2, BG3 auf, das insbesondere die bereitgestellte Versorgungsspannung von den Spannungsversorgungen 107, 108, 109 für die entsprechenden Betriebsmittel 110 umsetzt und zudem mit dem Bus 103 kommunizieren kann, um insbesondere Befehle, die über den Bus 103 übermittelt werden, entgegenzunehmen, und die Betriebsmittel 110 entsprechend anzusteuern.

Fig. 10b hingegen zeigt hingegen eine Ausgestaltung gemäß des weiteren Ausführungsbeispiels der Erfindung nach Fig. 9, bei der weiterhin die Busteilnehmer BT1, BT2 und ein weiterer Busteilnehmer BT3 wiederum von einer Spannungsversorgung 107, 108, 109 versorgt werden, wobei jedoch nun die Busteilnehmer BT1, BT2, BT3 jeweils zusätzlich zu Betriebsgeräten BG1', BG2', BG3' je eine Versorgungseinheit 1''', 1'''', 1''''' aufweisen, die nun die Versorgung des Busses 3''' übernehmen. Somit ist keine zentrale Busversorgungseinheit 102 nötig, um den Bus 3''' zu versorgen. Der Hauptgrund für diese Ausgestaltung ist, wie gesagt, dass die Kosten für Bussysteme aufgrund der Busversorgungseinheit 102 stark steigen, sofern es sich nur um ein Bussystem kleiner Größe handelt. Zudem muss die zentrale Busversorgungseinheit 102 auch entsprechend verdrahtet werden. Dabei stellt die zentrale Busversorgungseinheit 102 normalerweise eine Stromquelle mit einer Maximalausgabeleistung von 250 mA zur Verfügung.

In der in Fig. 10b gezeigten Ausgestaltung hat jeder Busteilnehmer BT1, BT2, BT3 nun seine eigene Versorgungseinheit 1''', 1"", 1''''', die jeweils einen Betriebsstrom I_{B} auf den Bus 3''' ausgeben können. Wenn also mehrere Busteilnehmer BT1, BT2, BT3 mit solchen Versorgungseinheiten 1"', 1"", 1''''' dem System hinzugefügt und an den Bus 3''' angeschlossen werden, können diese einerseits ihre Betriebsströme I_{B} gemeinsam auf den Bus 3''' ausgeben und andererseits den Busstrom I_{BUS} auf dem Bus 3''' erfassen und ihren eigenen Beitrag zu dem Gesamt-Busstrom einstellen.

Die zugrundeliegende Idee ist es also, innerhalb der Test- beziehungsweise Trainingsphase zu erkennen, welcher Strom auf dem Bus 3''' zur Verfügung steht. Die Busteilnehmer BT1, BT2, BT3 beziehungsweise ihre Steuereinheiten 4''', 4'''' erkennen daher den auf dem Bus 3''' anliegenden Strom innerhalb der Testphase und können daraufhin entscheiden, ob sie mittels ihrer eigenen Versorgungseinheit 1"', 1'''', 1''''' den Betriebsstrom I_{B} ausgeben und damit die Stromzufuhr zu dem Bus 3''' erhöhen.

Der von den Busteilnehmern BT1, BT2, BT3 (nur) innerhalb der Testphase ausgegebene Messstrom I_{M} hat einen vorgegebenen Pegel. So kann beispielsweise, wenn der Messstrom 10 mA beträgt und 10 Busteilnehmer an dem Bus 3''' angeschlossen sind, insgesamt ein Busstrom von 100 mA auf den Bus 3''' ausgegeben und von einem Busteilnehmer BT1, BT2, BT3 erfasst werden. Erfasst nun ein Busteilnehmer BT1, BT2, BT3, dass auf dem Bus ein Busstrom von 100 mA anliegt, so kann die Steuereinheit 4"', 4'''' des Busteilnehmers BT1, BT2, BT3 erkennen, dass bei einem Messstrom I_{M} von jeweils 10 mA somit 10 Busteilnehmer BT1, BT2, BT3 an der dezentralen Stromversorgung teilnehmen können.

Der Busteilnehmer BT1, BT2, BT3 erfasst dabei den Busstrom I_{BUS} auf dem Bus 3''' innerhalb der Testphase zu einem zufälligen Zeitpunkt. Insbesondere kann der Busteilnehmer BT1, BT2, BT3 einen (nicht gezeigten) Zufallsgenerator aufweisen, der den zufälligen Zeitpunkt innerhalb der Testphase beziehungsweise Trainingsphase festlegt. Weiter ist es möglich, dass eine zufällig erzeugte Zahl in dem Busteilnehmer BT1, BT2, BT3 hinterlegt ist, die einen Zeitpunkt innerhalb der Testphase definiert. Insbesondere kann jeder Busteilnehmer BT1, BT2, BT3 einen Beginn der Testphase dadurch erkennen, dass beispielsweise über den Bus 3''' ein bestimmtes Signal empfangen wird, das den Beginn der Testphase anzeigt. Dieses Signal kann insbesondere von einem Bus-Master versendet werden.

Erfasst nun also der Busteilnehmer BT1, BT2, BT3 den auf dem Bus 3''' anliegenden Strom, so erkennt er, dass, wenn alle Busteilnehmer einen Betriebsstrom I_{B} von beispielsweise 50 mA auf den Bus ausgeben würden, die Bus-Spezifikation verletzt würde. Diese spezifiziert z.B. dass lediglich 250 mA gemäß DALI-Standard auf dem Bus 3''' anliegen sollen. Insofern weist die Bus-Spezifikation wenigstens einen Schwellenwert für den maximal zulässigen Gesamt-Busstrom auf. Würde jeder Busteilnehmer BT1, BT2, BT3 den Betriebsstrom I_{B} von 50 mA auf den Bus ausgeben, so würde der Busstrom von 500 mA erreicht. Um dies zu vermeiden stellt der Busteilnehmer BT1, BT2, BT3 daraufhin seine Stromausgabe an den Bus 3''' ein.

Somit kann ein weiterer Busteilnehmer BT1, BT2, BT3, beispielsweise Busteilnehmer BT2, zu einem anderen zufälligen Zeitpunkt lediglich nunmehr den Busstrom von 90 mA auf dem Bus erkennen und somit ebenfalls feststellen, dass bei neuen Busteilnehmern die Busspezifikation, bei der der Testphase nachfolgenden Betriebsstromausgabe auf den Bus verletzt wäre.

Dieses Verfahren wird nun solange durchgeführt, bis z.B. ein Busteilnehmer BTx feststellt, dass auf dem Bus lediglich ein Busstrom von z.B. 50 mA oder weniger vorliegt. Ist dies der Fall, so stellt der Busteilnehmer BTx fest, dass bei einer Ausgabe des Betriebsstroms I_{B} nach der Testphase durch alle verbleibenden Busteilnehmer eine Bus-Spezifikation nicht verletzt wird, da bei einem jeweiligen Betriebsstrom von 50 mA der Schwellenwert für den maximalen Gesamt-Busstrom von 250 mA nicht verletzt wird.

Noch zu bemerken ist, dass die Versorgungseinheiten der Busteilnehmer auch in Betriebsgeräten der Busteilnehmer integriert sein können. Dies ist für den Busteilnehmer BT3 veranschaulicht.

Das Verfahren ist auch in Fig. 11 veranschaulicht. Hier ist kenntlich gemacht, dass in der Testphase zunächst alle Busteilnehmer mit einer Versorgungseinheit den Messstrom I_{M} auf den Bus ausgeben, so dass sich zunächst ein Strom I_{BUS} auf dem Bus 3''' ergibt, der dem Messstrom I_{M} multipliziert mit der Anzahl der Busteilnehmer N entspricht. Wie beschrieben, wird zu zufälligen Zeitpunkten nun durch die Busteilnehmer geprüft, ob sie nach Ablauf der Testphase einen Betriebsstrom bereitstellen sollen. Ist dies nicht der Fall, geben sie nicht länger einen Messstrom I_{M} auf den Bus 3''' aus. Dies führt zu einem Abfallen des Busstroms I_{BUS}.

Ein zu einem anderen Zeitpunkt testender Busteilnehmer wird somit einen veränderten Busstrom I_{BUS} feststellen, und die Steuereinheit des Busteilnehmers wird die entsprechende Auswertung auf Basis des veränderten Busstroms I_{BUS} vornehmen. Schließlich wird zumindest ein Busteilnehmer feststellen, dass die verbleibende Anzahl von Busteilnehmern, zum Beispiel N-3, jeweils einen Betriebsstrom I_{B} an den Bus 3''' ausgeben kann, ohne die Bus-Spezifikation beziehungsweise den Schwellenwert für den maximalen Gesamt-Busstrom zu verletzen. Nach Ablauf der Testphase stellen diese verbleibenden Busteilnehmer dann jeweils ihren Betriebsstrom I_{B} auf dem Bus 3''' zur Verfügung, so dass der Busstrom I_{Bus} insgesamt auf die Höhe der überlagerten und insbesondere addierten Betriebsströme z.B. N-3^{∗}I_{B} ansteigt.

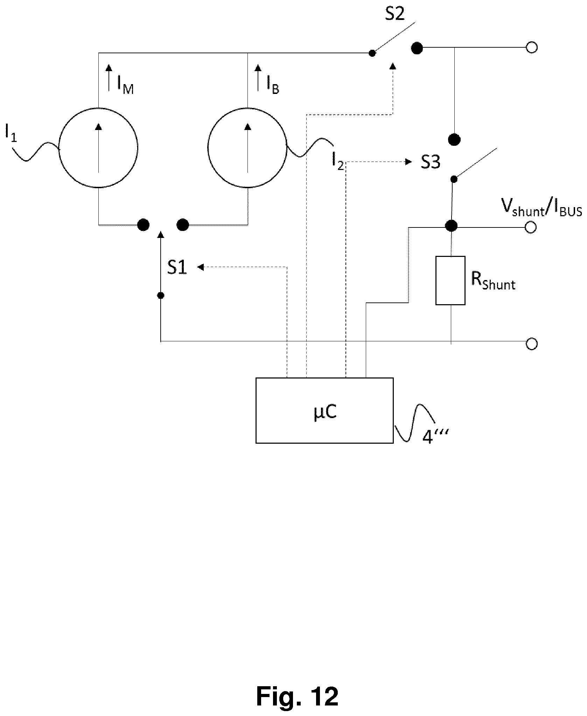

Mit Blick auf Fig. 12 ist nun schematisch eine konkretere Ausgestaltung einer Versorgungseinheit 1"', 1'''' gezeigt. Insbesondere weist die Versorgungseinheit 1''' eine erste Stromquelle I₁ und eine zweite Stromquelle I₂ auf. Die erste Stromquelle I₁ kann dabei beispielsweise den Messstrom I_{M} bereitstellen, während die zweite Stromquelle I₂ den Betriebsstrom I_{B} bereitstellen kann. Dargestellt sind ebenfalls die Schalter S1, S2, S3, die z.B. durch die Steuereinheit 4''' angesteuert werden. In Serie mit dem Schalter S3 ist ein Messwiderstand R_{Shunt} verschaltet, an dem die Steuereinheit 4''' eine Spannung V_{Shunt} erfassen kann.

Zu Beginn der Testphase ist der Schalter S2 geschlossen und der Schalter S1 auf die Stromquelle I₁ geschaltet, so dass die Stromquelle I₁ den Messstrom I_{M} auf den Bus 3''' ausgibt. Nach einer zufälligen Zeit, die, wie gesagt, durch einen Zufallsgenerator festgelegt werden kann, wird der Schalter S3 geschlossen und an dem Messwiderstand R_{Shunt} wird eine den Strom auf dem Bus wiedergebende Spannung beziehungsweise ein Strom gemessen. Da alle Busteilnehmer den gleichen Messstrom I_{M} auf den Bus ausgeben, entspricht der erfasste Busstrom also einem Vielfachen eines Messstroms I_{M} und die Anzahl der Busteilnehmer kann daher bestimmt werden. Ist die maximale Busteilnehmerzahl überschritten, das heißt, die Anzahl der Busteilnehmer ist überschritten, die einen Betriebsstrom I_{B} auf den Bus ausgeben können, ohne die Bus-Spezifikation zu verletzen, so wird der Schalter S2 geöffnet und die Stromquellen I₁, I₂ werden deaktiviert.

Andernfalls bleibt der Schalter S2 geschlossen und nach einer vorbestimmten Zeit, das heißt, nach der Testphase, wird der Schalter S1 auf die Stromquelle I₂ geschaltet und somit der Betriebsstrom I_{B} auf den Bus ausgegeben.

Selbstverständlich kann die Testphase auch automatisiert, beispielsweise nach einer vorbestimmten Zeit nach dem Beginn einer Stromversorgung des Busteilnehmers erfolgen.

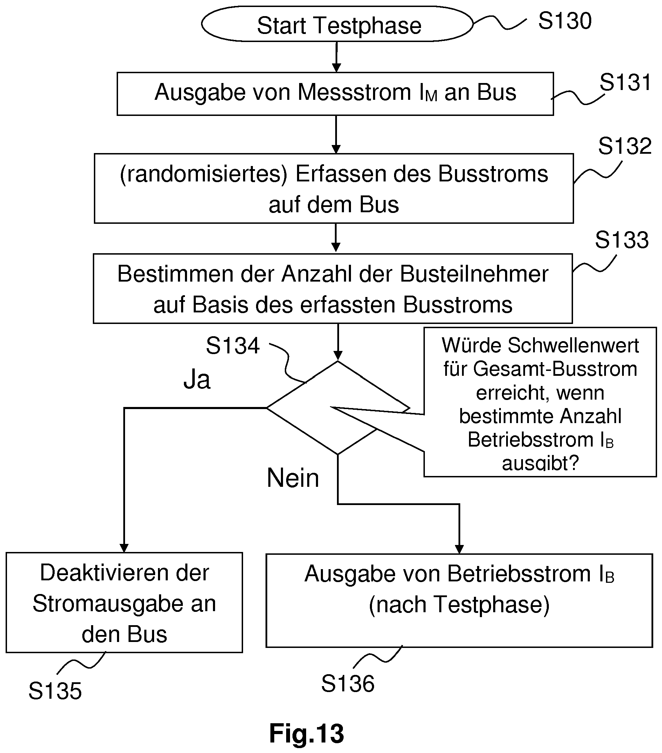

Mit Blick auf Fig. 13 ist das von einem erfindungsgemäßen Busteilnehmer durchgeführte Verfahren in einem Flussdiagramm veranschaulicht.

Zunächst beginnt die Testphase in Schritt S130. Der Start der Testphase kann, wie gesagt, durch eine Bussignal vorgegeben werden oder nach einer bestimmten Zeit ab Spannungsversorgung des Busteilnehmers, die in dem Busteilnehmer abgespeichert ist, beginnen. Die Länge der Testphase ist insbesondere ebenfalls in dem Busteilnehmer gespeichert.

Zunächst gibt die Versorgungseinheit 1''', 1'''' in Schritt S131 den Messstrom I_{M} auf den Bus 3''' aus.

Die Steuereinheit erfasst dann in Schritt S132 zu einem zufälligen Zeitpunkt t_{Rend}, der vorzugsweise zwischen 0 und 65,5 ms ab Beginn der Testphase liegt, den Busstrom I_{BUS} auf dem Bus 3'''.

In Schritt S133 bestimmt die Steuereinheit 4''' die Anzahl der an dem Bus 3''' angeschlossenen Busteilnehmer auf Basis des erfassten Busstroms I_{BUS}. Auf Basis der bestimmten Anzahl beziehungsweise des erfassten Busstroms I_{BUS} stellt die Steuereinheit 4''' des Busteilnehmers dann in Schritt S134 fest, ob ein Schwellenwert für den Gesamt-Busstrom erreicht würde, wenn alle Busteilnehmer der bestimmten Anzahl den Betriebsstrom I_{B} ausgeben würden. Der Schwellenwert stellt also das Kriterium dar, nach dem bestimmt wird, ob die Bus-Spezifikation verletzt ist oder nicht.

Ist eine Verletzung der Bus-Spezifikation gegeben beziehungsweise würde diese eintreten, so deaktiviert der Busteilnehmer eine Stromausgabe auf dem Bus 3''' in Schritt S135.

Andernfalls schaltet der Busteilnehmer nach Ablauf der Testphase auf die Ausgabe des Betriebsstroms I_{B} in Schritt S136 um.

In der Fig. 4 ist ein Ausführungsbeispiel für ein Verfahrensablaufdiagramm für ein erfindungsgemäßes Verfahren zum Betreiben eines Spannungsversorgungssystems C beschrieben. Das Spannungsversorgungssystem C ist beispielsweise wie in Fig. 3 aufgebaut und umfasst zumindest zwei Versorgungseinheiten 1, 1'.

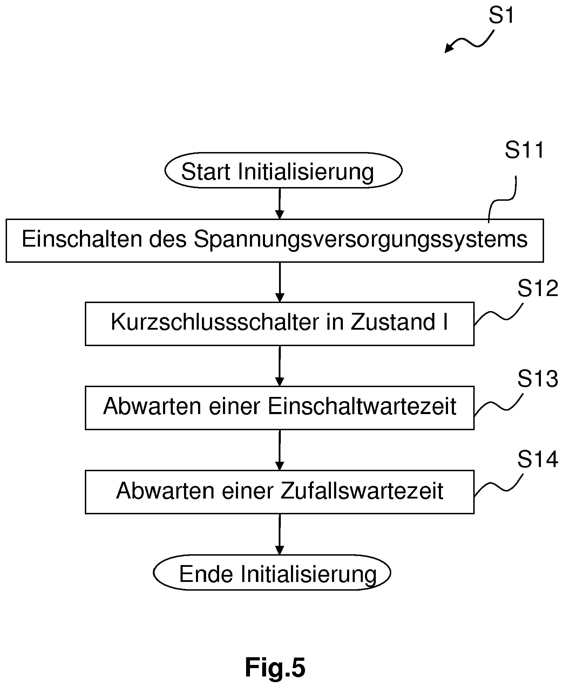

Im Schritt S1 wird eine Initialisierungsphase des erfindungsgemäßen Verfahrens eingeleitet. Die Initialisierungsphase ist in der Fig. 5 näher erläutert. In dieser Phase S1 wird insbesondere verhindert, dass zwei Versorgungseinheiten 1, 1' gleichzeitig den Kurzschlussschalter 5 in den ersten Schaltzustand I schalten.

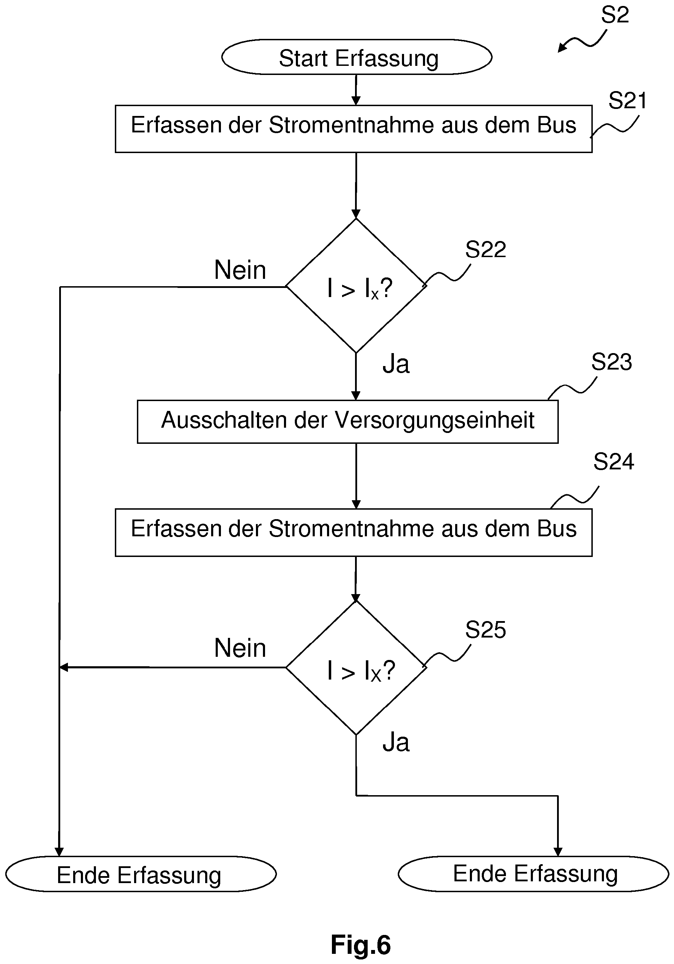

Im Anschluss an die Initialisierungsphase erfolgt eine erste Stromentnahme-Erfassen-Phase S2. Diese Stromentnahme-Erfassen-Phase S2 ist in der Fig. 6 näher erläutert.

Das Ergebnis der Stromentnahme-Erfassen-Phase S2 ist ein Vergleichsergebnis, inwieweit eine aktuell erfasste Stromentnahme aus dem Bus 3 größer ist als ein vorgegebener Wert I_{X} einer maximalen Stromentnahme, beispielsweise dem maximal zulässigen Strom von 240 Milliampere bei Betrieb eines Beleuchtungssystems A gemäß dem DALI Standard. Ist die Stromentnahme größer als der vorgegebene Wert I_{X} im Beleuchtungssystem (ja-Fall), so wird der Master-Modus-Betrieb S4 eingeleitet. Im nein-Fall wird der Slave-Modus-Betrieb S3 eingeleitet für das jeweilige Versorgungseinheit 1. Im Anschluss an den Slave-Modus-Betrieb S3 oder den Master-Modus-Betrieb S4 wird eine Zeitdauerüberprüfung S5 erfolgen, in welcher überprüft wird, ob der Kurzschlussschalter 5 einer der Versorgungseinheiten 1, 1' über eine maximal zulässige Zeit Tₓ hinaus im Schaltzustand I geschaltet ist. Ist dies der Fall wird das Verfahren erneut gestartet. Ist dies nicht der Fall so wird der Betrieb so wie er eingestellt ist beibehalten.

Das Verfahren gemäß Fig. 4 ist bevorzugt vor Ablauf einer Startprozedur-Wartezeit von 600 Millisekunden abgeschlossen. Somit ist vor dem Ende einer Stabilisierung des DALI-Busses 3 bereits eine Quasi-Kommunikation zwischen den Versorgungseinheiten 1 erzeugt und ein stabiler Betrieb des Beleuchtungssystems 1 garantiert.

In Fig. 5 ist die Initialisierungsphase S1 des erfindungsgemäßen Verfahrens gemäß Fig. 4 detaillierter dargestellt. Dazu wird zunächst im Schritt S11 das Spannungsversorgungssystem A eingeschaltet. Sodann erfolgt im Schritt S12 das Schalten des Kurzschlussschalters 5 in den ersten Schaltzustand I. Auf diese Weise wird die Busversorgungsleitung DA+ mit der Busversorgungsleitung DA- verbunden. Anschließend wird im Schritt S13 eine Einschaltwartezeit T_{Einschalt} abgewartet. Dies ist nötig, um der Versorgungseinheit 1 einen stabilen Betrieb zum ordnungsgemäßen Erfassen der aktuellen Stromentnahme durch die Steuereinheit 4 zu gewährleisten. Im Folgeschritt S14 erfährt die Versorgungseinheit 1 eine zufällige Wartezeit T_{Zufall} die abzuwarten gilt. Diese Zufallswartezeit T_{Zufall} ist für jede Versorgungseinheit im Spannungsversorgungssystem C individuell, sodass eine gleichzeitige Stromentnahme-Erfassung durch verschiedene Versorgungseinheiten 1 unterbunden wird. Auf diese Weise wird das Erfassen einer durch eine andere Versorgungseinheit 1 verfälschte Stromentnahme verhindert.

In Fig. 6 ist eine erste Stromentnahme-Erfassens-Phase S2 gemäß der Fig. 4 dargestellt. Dazu wird im Schritt S21 eine aktuelle Stromentnahme aus dem Bus 3 erfasst. Der Kurzschlussschalter 5 ist dazu weiterhin geschlossen, siehe Initialisierungsphase S1. Die Steuereinheit 4 erfasst die aktuelle Stromentnahme durch das Messelement 6. Im Folgeschritt S22 erfolgt ein Vergleich zwischen der aktuellen Stromentnahme mit einem vorgegebenen Wert I_{X} der maximalen Stromentnahme durch die Steuereinheit 4. Ist die aktuell erfasste Stromentnahme I kleiner als oder gleich dem vorgegebenen Wert I_{X}, so wird die erste Stromentnahme-Erfassens-Phase S2 beendet.

Ist die aktuell erfasste Stromentnahme I größer als der vorgegebene Wert I_{X}, so wird im Schritt S23 die Versorgungseinheit 1 deaktiviert. Anschließend erfolgt erneute das Erfassen der Stromentnahme aus dem Bus 3 im Schritt S24. Anschließend erfolgt erneut ein Vergleich S25, der dem Vergleich S22 entspricht. Ist die aktuell erfasste Stromentnahme I kleiner als oder gleich dem vorgegebenen Wert I_{X}, so wird die Versorgungseinheit 1 im Slave-Modus-Betrieb S3 betrieben und die Erfassungsphase S2 ist beendet. Ist die aktuell erfasste Stromentnahme I größer als der vorgegebene Wert I_{X}, so wird die erste Stromentnahme-Erfassens-Phase S2 beendet, die Versorgungseinheit 1 wird allerdings im Master-Modus-S4 betrieben.

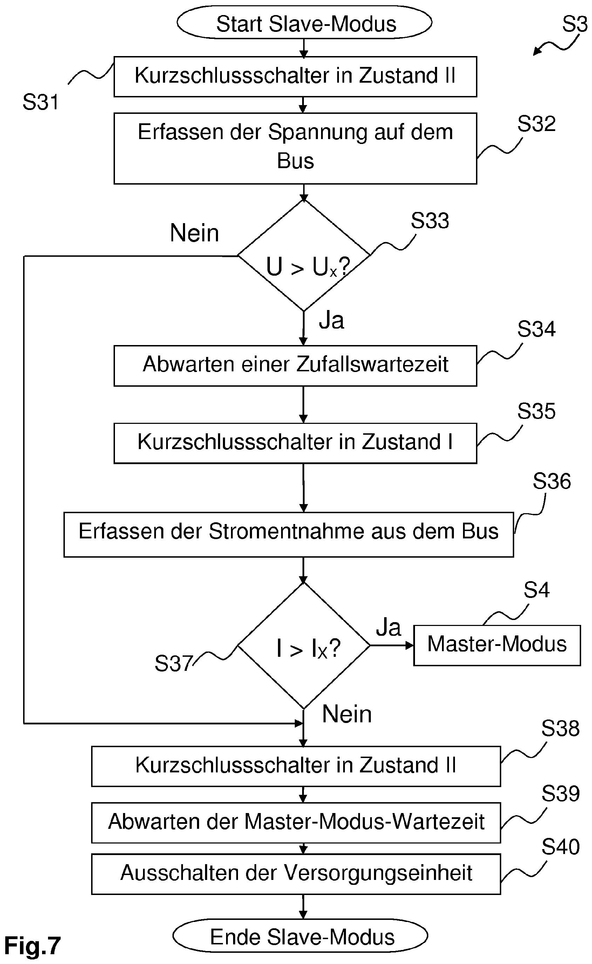

In Fig. 7 ist der Slave-Modus-Betrieb S3 gemäß der Fig. 4 detaillierter beschrieben. In den Slave-Modus-Betrieb S3 wird geschaltet, wenn im Schritt S25 oder im Schritt S22 die erfasste Stromentnahme geringer ist als der vorgegeben Wert I_{X}. Sodann wird im Schritt S31 der Kurzschlussschalter 5 geöffnet indem in den Schaltzustand II geschaltet wird. Somit ist die DA+ Leitung des Busses 3 von der DA- Leitung des Busses 3 getrennt. Sodann erfolgt das Erfassen eines Spannungswerts U des Busses 3 in Schritt S32. Ergibt ein Vergleich S33, dass die Spannung geringer ist als ein Referenzspannungswert Uₓ, beispielsweise 9 V, so wird davon ausgegangen, dass keine weitere Versorgungseinheit 1 im Spannungsversorgungssystem C vorhanden ist. Ergibt der Vergleich, dass die Spannung größer ist als beispielsweise 9 V, dann wird erneut eine Zufallszeit T_{zufall} abgewartet im Schritt S34. Sodann wird der Kurzschlussschalter 5 wieder in den geschlossenen Zustand I geschaltet, siehe Schritt S35. Es wird erneut die aktuelle Stromentnahme aus dem Bus 3 erfasst gemäß Schritt S36 und S37. Hier wird die aktuell erfasste Stromentnahme erneut mit dem Wert I_{X} verglichen, wobei bei Überschreiten des Wertes Iₓ in den Master-Modus gemäß S4 gewechselt wird.

Ist die aktuelle Stromentnahme geringer als der Wert I_{X}, so wird davon ausgegangen, dass keine weitere Versorgungseinheit 1 im Spannungsversorgungssystem C aktiv ist und der Kurzschlussschalter 5 wieder in den Zustand II gemäß S38 gebracht werden kann. Nach dem Abwarten einer Master-Modus-Wartezeit T_{Master} im Schritt S39 wird die Versorgungseinheit 1 ausgeschaltet, siehe Schritt S40. Der Slave-Modus S3 ist dann beendet.

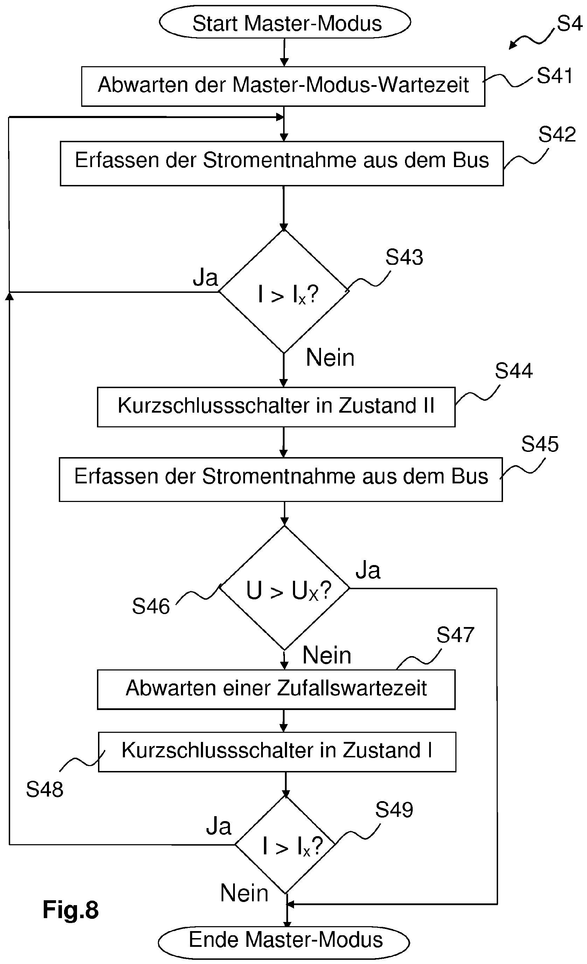

In Fig. 8 ist nun der Master-Modus-Betrieb S4 gemäß der Fig. 4 detaillierter dargestellt. Zunächst wird im Schritt S41 eine Master-Modus-Wartezeit T_{Master} abgewartet. Anschließend erfolgt in den Schritten S42 und S43 erneut das Erfassen der aktuellen Stromentnahme. Auf diese Weise wird erfasst, ob die aktuelle Stromentnahme unterhalb des Werts I_{X} liegt. In dieser Phase schaltet sich im Übrigen jede Versorgungseinheit 1 des Slave-Modus-Betriebs S3 ab, da eine aktuelle Stromentnahme über dem Wert I_{X} erfasst wurde und somit die aktuelle Stromentnahme aus dem Bus 3 zu reduzieren ist.

Sobald die aktuelle Stromentnahme unterhalb des Werts I_{X} ist, erfolgt das Schalten des Kurzschlussschalters 5 in den geöffneten Zustand I gemäß Schritt S44. Nun erfolgt ähnlich wie in den Schritten S33 und S32 das Erfassen der Spannung auf dem Bus 3 gemäß den Schritten S45 und S46. Ist die Spannung größer als ein Referenzspannungswert Uₓ, so wird davon ausgegangen, dass nur eine Master-Versorgungseinheit 1 im Beleuchtungssystem A vorhanden ist und diese die Hauptversorgung übernimmt. Wird im Schritt S46 festgestellt, dass die Spannung geringer ist als der Referenzspannungswert Uₓ, so sind weitere Versorgungseinheiten 1, 1' im Master-Modus im Beleuchtungssystem 1 vorhanden. Sodann wird eine Zufallswartezeit T_{zufall} abgewartet (S47) und der Kurzschlussschalter 8 wieder in den Schaltzustand I gemäß Schritt S48 geschaltet. Erneut erfolgt eine Stromentnahme-Erfassung im Schritt S49. Ist die aktuelle Stromentnahme größer als der Wert Iₓ, so wird erneut der Master-Modus gemäß Schritt S4 durchlaufen.

Durch die in den Fig. 4 bis Fig. 8 beschriebenen Verfahrensabläufen ist sichergestellt, dass die maximale Stromentnahme niemals oberhalb eines Werts Iₓ ist und das Beleuchtungssystem A an seine entsprechende Clusterung B, B', B" angepasst werden kann.

## Patentansprüche

1. Bussystem für Gebäudetechnikgeräte, insbesondere ein DALI-Bussystem, aufweisend:
- einen Gebäudetechnikbus (3'''), insbesondere einen DALI-Bus, und
- wenigstens zwei Busteilnehmer (BT1, BT2), die an den Gebäudetechnikbus (3''') angeschlossen sind und die jeweils eine Versorgungseinheit (1''', 1'''') aufweisen, wobei die Versorgungseinheiten (1''', 1'''') unabhängig voneinander betreibbar sind, und wobei
jeder der Busteilnehmer (BT1, BT2) dazu eingerichtet ist, einen von der jeweiligen Versorgungseinheit (1''', 1'''') erzeugten Messstrom (IM) an den Gebäudetechnikbus (3''') auszugeben, und wobei die wenigstens zwei Busteilnehmer (BT1, BT2) so mit dem Gebäudetechnikbus (3''') verbunden sind, dass sich angelegte Messströme (I_{M}) überlagern, insbesondere addieren,
wobei die Busteilnehmer (BT1, BT2) jeweils eine Steuereinheit (4''', 4'''') aufweisen, die dazu eingerichtet ist, einen an dem Gebäudetechnikbus (3''') anliegenden Busstrom (I_{BUS}) zu erfassen und auszuwerten, und auf Basis des erfassten Busstroms (I_{BUS}) und des Messstroms (IM) eine Anzahl (N) von an den Gebäudetechnikbus (3''') angeschlossenen Busteilnehmern (BT1, BT2) zu ermitteln,
wobei jede Steuereinheit (4''', 4'''') dazu eingerichtet ist, auf Basis der ermittelten Anzahl (N) von Busteilnehmern (BT1, BT2) zu bestimmen, ob ein Schwellenwert für einen Gesamt-Busstrom überschritten wird, wenn die ermittelte Anzahl (N) von Busteilnehmern (BT1, BT2) jeweils statt des Messstroms (IM) einen Betriebsstrom (IB) an den Gebäudetechnikbus (3''') ausgibt.

2. Bussystem nach Anspruch 1, wobei jede Steuereinheit (4''', 4"") dazu eingerichtet ist, die Versorgungseinheit (1''', 1'''') und/oder eine Stromausgabe durch die Versorgungseinheit (1''', 1'''') an den Gebäudetechnikbus (3''') zu deaktivieren, wenn der Schwellenwert überschritten werden würde.

3. Bussystem nach einem der vorgehenden Ansprüche, wobei der Schwellenwert für einen zulässigen Gesamt-Busstrom mit 150 - 300 Milliampere, insbesondere 250 Milliampere definiert ist.

4. Verfahren zum Betrieb von Gebäudetechnikgeräten, wobei wenigstens zwei Busteilnehmer (BT1, BT2) an einen Gebäudetechnikbus (3''') angeschlossen sind und jeweils eine Versorgungseinheit (1''', 1'''') aufweisen, wobei die Versorgungseinheiten (1''', 1'''') unabhängig voneinander betrieben werden, wobei jeder der Busteilnehmer (BT1, BT2) einen von der jeweiligen Versorgungseinheit erzeugten Messstrom (IM) an den Gebäudetechnikbus (3''') ausgibt, und wobei die wenigstens zwei Busteilnehmer (BT1, BT2) so mit dem Gebäudetechnikbus (3''') verbunden sind, dass sich angelegte Messströme überlagern, insbesondere addieren,
wobei die Busteilnehmer (BT1, BT2) jeweils eine Steuereinheit (4''', 4'''') aufweisen, die einen an dem Gebäudetechnikbus (3''') anliegenden Busstrom (I_{BUS}) erfasst und auswertet, und auf Basis des erfassten Busstroms (I_{BUS}) eine Anzahl (N) von an den Gebäudetechnikbus (3''') angeschlossenen Busteilnehmern (BT1, BT2) ermittelt,
wobei jede Steuereinheit (4"', 4'''') auf Basis der ermittelten Anzahl (N) von Busteilnehmern (BT1, BT2) bestimmt, ob ein Schwellenwert für einen Gesamt-Busstrom überschritten wird, wenn die ermittelte Anzahl (N) von Busteilnehmern (BT1, BT2) jeweils statt des Messstroms (IM) einen Betriebsstrom (IB) an den Gebäudetechnikbus (3''') ausgibt.

## Claims

1. A bus system for building services equipment, in particular a DALI bus system, having:
- a building services bus (3'''), in particular a DALI bus, and
- at least two bus subscribers (BT1, BT2), which are connected to the building services bus (3''') and in each case have a supply unit (1''', 1''''), wherein the supply units (1''', 1'''') can be operated independently of each other, and wherein each of the bus subscribers (BT1, BT2) is configured to output a measurement current (IM) generated by the respective supply unit (1''', 1'''') to the building services bus (3'''), and wherein the at least two bus subscribers (BT1, BT2) are connected to the building services bus (3''') such that applied measurement currents (I_{M}) overlap, in particular are added up,
wherein the bus subscribers (BT1, BT2) in each case have a control unit (4"', 4''''), which is configured to detect and to evaluate a bus current (Iₐᵤₛ) applied to the building services bus (3'''), and on the basis of the detected bus current (Iₐᵤₛ) and the measurement current IM) to determine a number (N) of bus subscribers (BT1, BT2) connected to the building services bus (3'''),
wherein each control unit (4"', 4'''') is configured to determine based on the determined number (N) of bus subscribers (BT1, BT2) whether a threshold value for a total bus current is exceeded, if the determined number (N) of bus subscribers (BT1, BT2) outputs in each case an operating current (IB) to the building services bus (3''') instead of the measurement current (IM).

2. A bus system according to Claim 1, wherein each control unit (4"', 4'''') is configured to deactivate the supply unit (1''', 1'''') and/or a current output through the supply unit (1''', 1'''') to the building services bus (3'''), if the threshold value would be exceeded.

3. A bus system according to any one of the preceding claims, wherein the threshold value for a permissible total bus current is defined with 150-300 milliamperes, in particular 250 milliamperes.

4. A method for operating building services equipment, wherein at least two bus subscribers (BT1, BT2) are connected to a building services bus (3''') and in each case have a supply unit (1''', 1''''), wherein the supply units (1''', 1'''') can be operated independently of each other, and wherein each of the bus subscribers (BT1, BT2) outputs a measurement current (IM) generated by the respective supply unit to the building services bus (3'''), and wherein the at least two bus subscribers (BT1, BT2) are connected to the building services bus (3''') such that applied measurement currents overlap, in particular are added up,
wherein the bus subscribers (BT1, BT2) in each case have a control unit (4"', 4''''), which detects and evaluates a bus current (Iₐᵤₛ) applied to the building services bus (3'''), and on the basis of the detected bus current (Iₐᵤₛ) determines a number (N) of bus subscribers (BT1, BT2) connected to the building services bus (3'''),
wherein each control unit (4"', 4"") determines on the basis of the determined number (N) of bus subscribers (BT1, BT2) whether a threshold value for a total bus current is exceeded, if the determined number (N) of bus subscribers (BT1, BT2) outputs in each case an operating current (IB) to the building services bus (3''') instead of the measurement current (IM).

## Revendications

1. Système de bus pour des appareils de domotique, plus particulièrement un système de bus DALI, comprenant :
- un bus domotique (3"'), plus particulièrement un bus DALI et
- au moins deux utilisateurs de bus (BT1, BT2), qui sont raccordés au bus domotique (3"') et qui comprennent chacun une unité d'alimentation (1''', 1''''), les unités d'alimentation (1''', 1'''') pouvant être contrôlées indépendamment l'une de l'autre et chacun des utilisateurs du bus (BT1, BT2) étant conçu pour envoyer un courant de mesure (IM) généré par l'unité d'alimentation (1''', 1'''') correspondante au bus domotique (3"') et les au moins deux utilisateurs de bus (BT1, BT2) étant reliés avec le bus domotique (3"') de façon à ce que les courants de mesure (I_{M}) appliqués se superposent, plus particulièrement s'additionnent,
les utilisateurs du bus (BT1, BT2) comprenant chacun une unité de commande (4''', 4"") qui est conçue pour mesurer et analyser un courant de bus (I_{BUS}) appliqué au bus domotique (3"') et pour déterminer, sur la base du courant de bus (I_{BUS}) mesuré et du courant de mesure (IM), un nombre (N) d'utilisateurs de bus (BT1, BT2) raccordés au bus domotique (3"'), chaque unité de commande (4''', 4"") étant conçue pour déterminer, sur la base du nombre (N) d'utilisateurs de bus (BT1, BT2) déterminé, si une valeur seuil pour un courant de bus total est dépassé lorsque le nombre (N) d'utilisateurs de bus (BT1, BT2) déterminé envoie, au lieu du courant de mesure (IM), un courant de service (IB) au bus domotique (3"').

2. Système de bus selon la revendication 1, chaque unité de commande (4''', 4"") étant conçue pour désactiver l'unité d'alimentation (1''', 1'''') et/ou une sortie de courant par l'unité d'alimentation (1''', 1'''') vers le bus domotique (3"') lorsque la valeur seuil aurait été dépassée.

3. Système de bus selon l'une des revendications précédentes, la valeur seuil étant définie pour un courant de bus total admissible de 150 à 300 milliampères, plus particulièrement de 250 milliampères.

4. Procédé de commande d'appareils domotiques, au moins deux utilisateurs de bus (BT1, BT2) étant raccordés à un bus domotique (3"') et comprenant chacun une unité d'alimentation (1''', 1''''), les unités d'alimentation (1''', 1'''') étant contrôlées indépendamment l'une de l'autre, chacun des utilisateurs du bus (BT1, BT2) envoyant un un courant de mesure (IM) généré par l'unité d'alimentation (1''', 1'''') correspondante au bus domotique (3"') et les au moins deux utilisateurs de bus (BT1, BT2) étant reliés avec le bus domotique (3"') de façon à ce que les courants de mesure (IM) appliqués se superposent, plus particulièrement s'additionnent,
les utilisateurs du bus (BT1, BT2) comprenant chacun une unité de commande (4''', 4"") qui mesure et analyse un courant de bus (I_{BUS}) appliqué au bus domotique (3"') et détermine, sur la base du courant de bus (I_{BUS}) mesuré et du courant de mesure (IM), un nombre (N) d'utilisateurs de bus (BT1, BT2) raccordés au bus domotique (3"'), chaque unité de commande (4''', 4"") déterminant, sur la base du nombre (N) d'utilisateurs de bus (BT1, BT2) déterminé, si une valeur seuil pour un courant de bus total est dépassé lorsque le nombre (N) d'utilisateurs de bus (BT1, BT2) déterminé envoie, au lieu du courant de mesure (IM), un courant de service (IB) au bus domotique (3"').
